Europäisches Patentamt

(19) European Patent Office

Office européen des brevets

(11) Numéro de publication: **0 112 426 B1**

(12) **FASCICULE DE BREVET EUROPEEN**

(45) Date de publication du fascicule du brevet:
**11.03.87**

(21) Numéro de dépôt: **82430043.8**

(22) Date de dépôt: **28.12.82**

(51) Int. Cl.⁴: **H 04 L 11/16, H 04 J 3/06, H 04 L 7/00, H 04 Q 11/04**

(54) **Système de synchronisation pour réseau de communication multiplex en boucle fermée.**

(43) Date de publication de la demande:
**04.07.84 Bulletin 84/27**

(45) Mention de la délivrance du brevet:
**11.03.87 Bulletin 87/11**

(84) Etats contractants désignés:
**DE FR GB**

(56) Documents cités:
US - A - 3 681 759
US - A - 3 919 484
US - A - 3 925 621
US - A - 3 928 727
US - A - 4 071 706
US - A - 4 229 816

PATENTS ABSTRACTS OF JAPAN, vol. 2, no. 99, 17 août 1978, page 5005E78
PATENTS ABSTRACTS OF JAPAN, vol. 2, no. 99, 17 août 1978, page 5005E78
IEEE TRANSACTIONS ON CIRCUITS AND SYSTEMS, vol. CAS-22, no. 7, juillet 1975, pages 610-618, New York, USA, A.C. DAVIES: "Discrete-time synchronization of digital data networks"
PATENTS ABSTRACTS OF JAPAN, vol. 4, no. 87, 21 juin 1980, page 569E16

(73) Titulaire: **International Business Machines Corporation, Old Orchard Road, Armonk, N.Y. 10504 (US)**
(84) Etats contractants désignés: **DE GB**

(73) Titulaire: **Compagnie IBM FRANCE, 5 Place Vendôme, F-75000 Paris 1er (FR)**
(84) Etats contractants désignés: **FR**

(72) Inventeur: **Amboise, Modeste, Résidence Le Président Rue de Stamford, F-06140 Vence (FR)**
Inventeur: **Demange, Michel, 902 Route de Gattières, F-06640 Saint-Jeannet (FR)**
Inventeur: **Lebizay, Gérard, 6, Forest Park Avenue, Larchmont New York 10538 (US)**
Inventeur: **Munier, Jean-Marie, 11 chemin des Colles, F-06800 Cagnes Sur Mer (FR)**
Inventeur: **Peyronnenc, Michel Henri Paul, "Font de la Peiro", F-06640 Saint-Jeannet (FR)**

(74) Mandataire: **de Pena, Alain, Compagnie IBM France Département de Propriété Intellectuelle, F-06610 La Gaude (FR)**

## Description

La présente invention concerne les systèmes de communication multiplex dans lesquels plusieurs unités sont connectées en série par une liaison en boucle fermée fonctionnant en multiplex temporel avec des trames récurrentes de durées égales. La présente invention concerne plus particulièrement un système de synchronisation pour maintenir constant le temps de propagation des voies temporelles sur la liaison en boucle et distribuer les signaux de chronologie aux unités connectées par cette liaison. L'invention est particulièrement bien adaptée par la synchronisation des réseaux de connexion en boucles capables de commuter aussi bien des signaux de voix que des signaux de données, tels que celui décrit et revendiqué dans la demande de brevet européen EP-A 0 112 425 déposée conjointement à celle-ci par la demanderesse.

Etat de la Technique

Dans les réseaux de connexion dans lesquels plusieurs modules de commutation sont connectés en série par un liaison en boucle fermée fonctionnant en multiplex témporel, et qui sont capables de commuter des signaux de voix, la régulation du temps de propagation des signaux sur la liaison en boucle a une très grande importance comme expliqué ci-après. Dans de tels réseaux, le temps est divisé en trames récurrentes de durées égales et sur la liaison en boucle circule continuellement un message multiplex de durée égale à celle d'une trame et qui transporte un certain nombre de voies temporelles. Pour établir une connexion entre une station émettrice et une station réceptrice, on affecte une voie temporelle à la station réceptrice et, à chaque trame, la station émettrice transfère un échantillon de voix à la station réceptrice au moyen de la voie temporelle affectée à cette dernière. Les échantillons de voie étant produits par la station émettrice à cadence régulière, généralement égale à 8 kHz, il est impératif que la voie temporelle affectée à la station réceptrice soit disponible à la station émettrice à cette même cadence. Il est donc nécessaire de prévoir un système de synchronisation pour maintenir constant et égal à la durée d'une trame le temps de propagation du message multiplex autour de la liaison en boucle. Il est aussi si bien sûr nécessaire que le différents modules du réseau de connexion disposent de signaux de chronologie corrects pour pouvoir intercepter les voies temporelles lorsque celles-ci se présentent à leur entrée. Le brevet US-A 3 681 759 décrit un dispositif de synchronisation de boucle pour un système de communication multiplex dans lequel les voies temporelles transportent des données à des vitesses différentes. Le dispositif de synchronisation comprend principalement une mémoire tampon à grande vitesse, une mémoire tampon à vitesse moyenne et une mémoire tampon à vitesse lente, qui sont sélectivement écrites avec le contenu des voies temporelles entrantes sous le contrôle d'un signal de chronologie entrant, et qui sont lues sous le contrôle d'un signal de chronologie sortant. Un tel dispositif présente une très grande complexité et ne se prête pas à la synchronisation des signaux de voie sur une boucle.

Le brevet US-A 4 071 706 décrit un dispositif de synchronisation de boucle beaucoup plus simple que celui décrit ci-dessus mais qui est prévu pour fonctionner non pas avec une liaison en boucle fonctionnant en multiplex temporel mais avec une liaison en boucle sur laquelle circulent des paquets de données. Il comprend principalement une mémoire tampon dans laquelle les paquets de données reçus sont écrits puis en sont lus sous le contrôle d'un même signal de chronologie. L'effet de synchronisation est obtenu en jouant sur la longueur du paquet de données retransmis par le dispositif de synchronisation. Un tel dispositif de synchronisation n'est pas utilisable dans le réseaux de connexion temporels capables de commuter des signaux de voie.

Le brevet US-A 3 925 621 décrit un système de communication en boucle fermée qui fonctionne en multiplex temporel et dans lequel est prévu un dispositif de bouclage qui maintien le temps de propagation des trames le long de la boucle égal à un nombre entier de durées de trames. Le dispositif de bouclage comprend une mémoire dans laquelle sont emmagasinées les données reçues de la boucle à des adresses fournies par un dispositif d'adressage d'entrée synchronisé sur les signaux de chronologie reçus de la boucle. Les données sont lues de la mémoire sous le contrôle d'un dispositif d'adressage de sortie synchronisé sur les signaux de chronologie fournis par le dispositif de bouclage. Ce brevet ne décrit pas de moyens qui permettraient de résoudre le problème de contention entre les instants d'écriture et de lecture des données dans la mémoire.

Le brevet US-A 3 928 727 décrit un système de synchronisation pour un système de communication en multiplex temporel dans lequel le contenu des trames reçues est emmagasiné temporairement dans une mémoire. Dans chaque intervalle de temps de la trame sont définies quatre fenêtres, deux d'entre elles entourant un premier signal fourni par l'horloge locale, et les deux autres fenêtres entourant un second signal fourni par l'horloge locale. La mémoire est toujours lue au début de chaque intervalle de temps. L'instant d'écriture est soit l'instant du premier signal soit l'instant du second signal selon que le signal d'horloge reçu se situe dans l'une ou l'autre des fenêtres.

Ce système ne résout que partiellement le problème de contention dans un système de communication non en boucle, car il ne peut éviter la retransmission des intervalles de temps dans certaines circonstances.

Exposé de l'Invention

L'objet de l'invention est de fournir un système de synchronisation peu complexe pour maintenir constant la durée de propagation des voies temporelles sur une liaison en boucle fermée tout en n'altérant pas le contenu de ces voies temporellés.

Un autre objet de l'invention est de fournir un système de synchronisation pour distribuer les signaux de chronologie aux différentes unités connectées par la liaison en boucle fermée, qui soit fiable et permette une détection rapide de toute perte de synchronisation.

D'une manière générale, l'invention propose un système de synchronisation pour un système de communciation dans lequel plusieurs unités sont connectées en série par une liaison unidirectionnelle en boucle qui fonctionne en mode multiplex temporel avec des trames récurrentes de durées égales, chacune d'elles étant divisée en une pluralité d'intervalles de temps de durées égales pendant lesquels la liaison en boucle transporte une pluralité de voies temporelles, ledit système de synchronisation comprenant un dispositif de bouclage inséré dans la liaison en boucle et comprenant une mémoire à accès aléatoire, des moyens d'entrée pour appliqur la liaison en boucle amont à l'entrée de données de la mémoire, des moyens de sortie pour appliquer la sortie des données de la mémoire à la liaison en boucle aval, un premier compteur pour générer séquentiellement des adresses d'entrée sous la commande d'un signal de chronologie reçu, à chaque intervalle de temps, ce premier compteur fournissant une adresse d'entrée qui spécifie l'adresse de la position de la mémoire à laquelle la sortie desdits moyens d'entrée doit être emmagasinée, et un second compteur pour générer séquentiellement les adresses de sortie sous la commande d'un signal de chronologie transmis, à chaque intervalle de temps, ce second compteur fournissant une adresse de sortie qui spécifie l'adresse de la position de la mémoire qui doit en être lue, ledit dispositif de bouclage étant caractérisé en ce qu'il comprend:

des moyens pour diviser chaque intervalle de temps en deux périodes d'observation,

des moyens pour définir dans chaque intervalle de temps une période de lecture fixe et deux périodes d'écritures fixes qui entourent la période de lecture fixe,

des moyens pour commander la lecture de la mémoire pendant une période de lecture fixe à l'intérieur de chaque intervalle de temps,

des moyens de sélection pour sélectionner l'une des deux périodes d'écriture selon que le signal de chronologie reçu se situe à l'intérieur de l'une ou l'autre des deux périodes d'observation, et

des moyens pour commander l'écriture de la mémoire pendant la période d'écriture sélectionnée par lesdits moyens de sélection.

Selon un aspect de l'invention, le système de synchronisation comprend:

une liaison de chronologie en boucle fermée par un dispositif de chronologie maître qui fournit sur celle-ci ledit signal de chronologie transmis et reçoit de celle-ci ledit signal de chronologie reçu, et

plusieurs dispositifs de chronologie esclaves insérés dans la liaison de chronologie en boucle pour régénérer le signal de chronologie circulant sur la liaison de chronologie en boucle, chacun des dispositifs de chronologie esclaves dérivant du signal de chronologie régénéré un signal de chronologie qui a une fréquence supérieure à celle du signal de chronologie régénéré et qui est appliqué à un groupe d'au moins une unité, et:

chacun des dispositifs de chronologie maître et esclave comprend des moyens de vérification de chronologie qui en réponse à une défectuosité du signal de chronologie sur la liaison de chronologie appliquée à l'entrée du dispositif de chronologie interrompent la génération du signal de chronologie régénéré.

Brève Description des Figures

La fig. 1 représente schématiquement la structure générale d'un réseau de connexion incorporant l'invention.

La fig. 2 illustre schématiquement la circulation des données sur le réseau de connexion de la fig. 1.

La fig. 3 illustre schématiquement une communication bidirectionnelle entre deux stations A et B attachées respectivement aux modules de commutation MC-1 et MC-N.

La fig. 4 constitué par l'assemblage des fig. 4A à 4F représente le bloc diagramme d'un module de commutation.

La fig. 5 est un diagramme des temps qui aidera à la compréhension du fonctionnement du module de commutation de la fig. 4.

La fig. 6 représente le bloc diagramme du dispositif de bouclage 11 de la fig. 1.

La fig. 7 est un diagramme des temps qui aidera à la compréhension du fonctionnement du dispositif de bouclage 11 illustré sur la fig. 6.

La fig. 8 représente un exemple de réalisation des dispositifs de chronologie 13 et 18 de la fig. 1.

La fig. 9 représente le bloc diagramme du dispositif de vérification de chronologie 208 de la fig. 8.

Description Détaillée de l'Invention

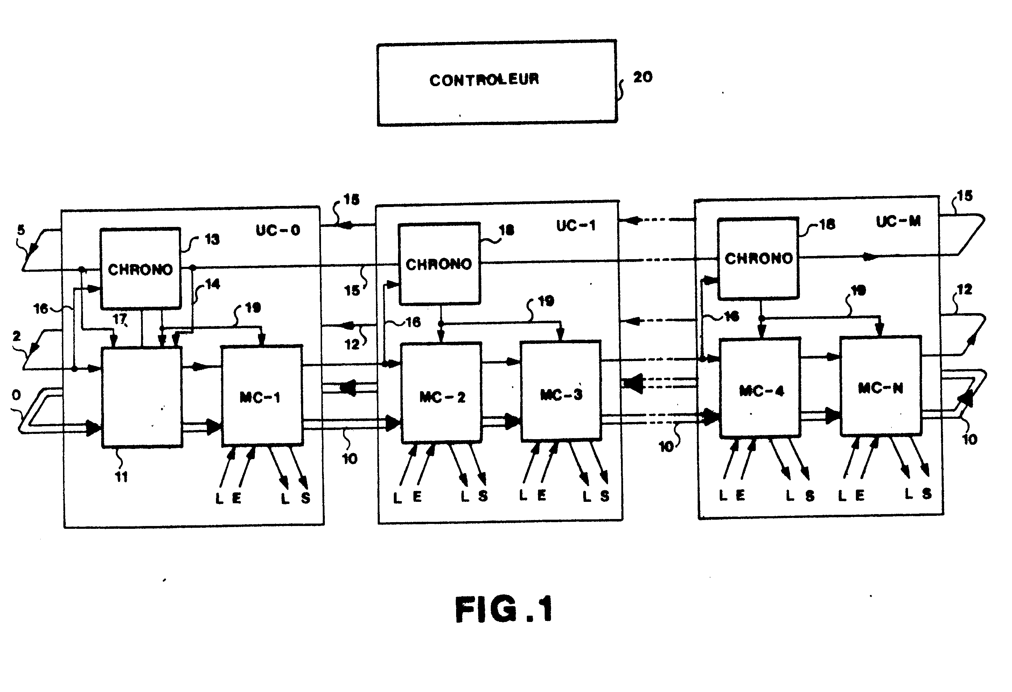

On a représenté sur la fig. 1 la structure générale d'un réseau de connexion incorporant le système de synchronisation de l'invention et qui permet de connecter sélectivement une ou plusieurs voies temporelles entrantes sur une ou plusieurs liaisons d'interface entrantes LE à une ou plusieurs voies temporelles sortantes sur une ou plusieurs liaisons d'interface sortantes LS. Le réseau de connexion est articulé autour d'une liaison unidirectionnelle 10 que l'on désignera par la suite par anneau. L'anneau fonctionne en mode multiplex temporel avec des trames récurrentes d'une durée de 125 microsecondes. Sur l'anneau 10 circule continuellement un message multiplex dont la durée est égale à celle d'une trame et qui permet d'acheminer, par exemple, 512 voies temporelles dites voies d'échange. Les liaisons d'interface LE et LS sont rassemblées en groupes et chaque groupe est couplé à l'anneau par un module de commutation MC. Le nombre de modules de commutation dépend du nombre de liaisons d'interface à connecter et de la puissance de commutation des modules de commutation. Les modules de commutation sont eux-mêmes groupés dans des unités de commutation UC. Sur la fig. 1, on a représenté un module de commutation MC-1 dans l'unité de commutation UC-0, deux modules de commutation MC-2 et MC-3 dans l'unité de commutation UC-1 et deux modules de commutation MC-4 et MC-N dans l'unité de commutation UC-M. L'unité de commutation UC-0, diffère des autres unités en ce qu'elle comprend un dispositif de bouclage 11 qui maintient constant et égal à 125 microsecondes le temps de propagation d'un message multiplex autour de l'anneau. Un signal de synchronisation de trame ST circule sur une ligne de synchronisation 12 qui est parallèle à l'anneau et qui, comme lui, traverse les différents modules de commutation MC-1-MC-N et le dispositif de bouclage 11. Un dispositif de chronologie maître 13 situé dans l'unité de commutation UC-0 produit un signal de chronologie à 2,048 MHz qui est appliqué par une ligne 14 au dispositif de bouclage 11 et qui est distribué de proche en proche à chacune des unités de commutation au moyen d'une ligne de chronologie 15 qui est rebouclée sur le dispositif de chronologie maître 13. Le dispositif de chronologie maître 13 reçoit par une ligne 16 le signal de synchronisation ST présent à l'entrée du dispositif de bouclage 11 sur la ligne de synchronisation 12, et fournit sur une ligne 17 un signal de synchronisation de trame régénéré qui est appliqué au dispositif de bouclage 11. Dans chacune des unités de commutation UC-1-UC-M le signal de chronologie à 2,048 MHz est régénéré par un dispositif de chronologie esclave 18 qui reçoit aussi le signal de synchronisation de trame présent à l'entrée de l'unité de commutation par une ligne qu'on a référencé aussi 16 dans un souci de cohérence. Chacune des unités de chronologie 13 et 18 produit un signal de chronologie à 16,384 MHz qui est appliqué à tous les éléments de l'unité de commutation par une ligne 19. Un contrôleur 20 contrôle l'ensemble des unités de commutation.

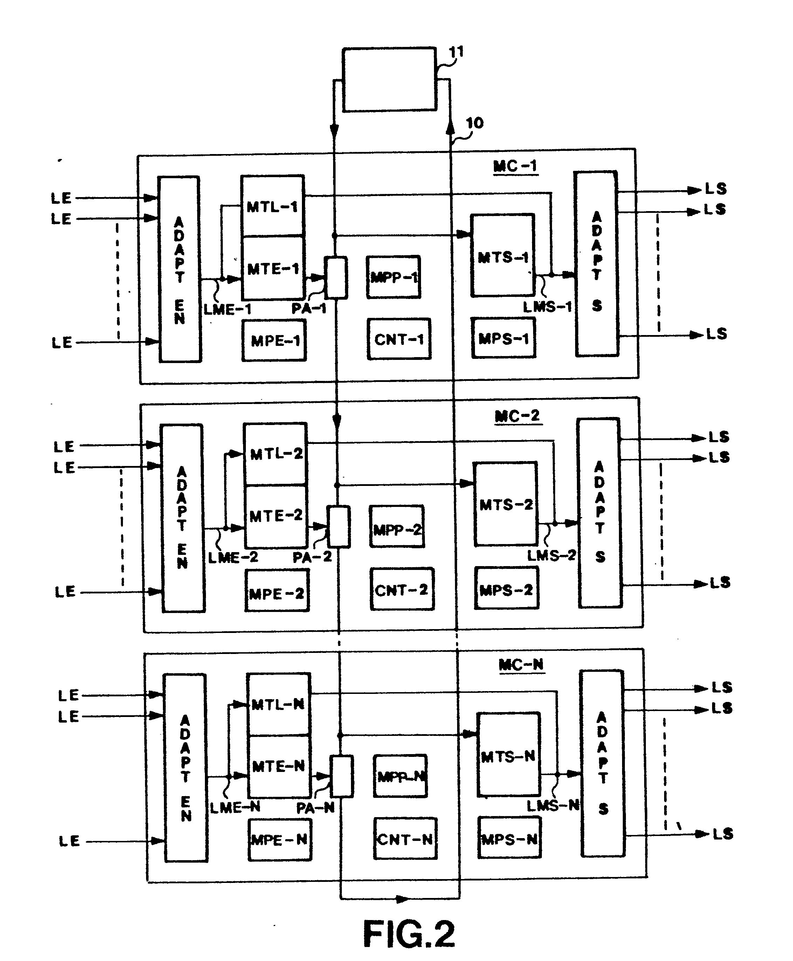

Avant de décrire dans le détail les éléments du réseau de connexion, on décrira les diverses fonctions de commutation qu'il permet de réaliser en se référant à la fig. 2 sur laquelle on n'a représenté que trois modules de commutation référencés MC-1, MC-2 et MC-N et qui peuvent être situés dans la même unité de commutation ou dans des unités différentes, et le dispositif de bouclage 11. Dans le mode de réalisation illustré sur la fig. 2 et qui sera décrit en détail par la suite, chacune des liaisons d'interface LE et LS fonctionne en mode multiplex temporel avec des trames récurrentes de 125 microsecondes, chaque trame pouvant acheminer 32 voies temporelles et chacune d'elles pouvant transporter un octet de huit bits. Chaque octet peut être indifféremment un octet de huit bits de données en provenance ou à destination d'une station numérique tel qu'un terminal de données, ou un échantillon de voix codé en numérique en provenance ou à destination d'une station analogique telle qu'un poste téléphonique d'abonné. Chaque module de commutation couple l'anneau 10 à un groupe de seize liaisons d'interface entrantes et le groupe des seize liaisons d'interface sortantes qui leur correspondent. Les seize liaisons d'interface entrantes sont multiplexées sur une liaison multiplex entrante LME au moyen d'un adaptateur d'entrée ADAPT-EN. Chaque liaison multiplex entrante fonctionne en multiplex temporel avec des trames de 125 microsecondes, chaque trame permettant l'acheminement de 512 voies d'un octet. Les seize liaisons d'interface sortantes résultent du démultiplexage d'une liaison multiplex sortante LMS par un adaptateur de sortie ADAPT-S. Chaque liaison multiplex sortante fonctionne en multiplex temporel avec des trames de 125 microsecondes, chaque trame permettant l'acheminement de 512 voies d'un octet. Dans chaque module de commutation, les trames sur l'anneau, sur les liaisons multiplex LME et LMS et sur les liaisons d'interface LE et LS sont synchronisées entre-elles.

Tous les modules de commutation sont identiques et chacun d'eaux comprend principalement un compteur d'intervalles de temps CNT, une porte dite porte d'anneau PA, un commutateur temporel d'entrée, un commutateur temporel de sortie et un commutateur temporel local. La porte d'anneau PA est commandée par une mémoire de pointeurs de porte MPP qui contient autant de positions de un bit qu'il y a de voies d'échange dans une trame, c'est-à-dire 512 positions de un bit. Le commutateur temporel d'entrée comprend principalement une mémoire tampon d'entrée MTE dont l'entrée est reliée à la liaison multiplex entrante LME et dont la sortie est reliée à l'anneau à travers la porte d'anneau PA. La mémoire tampon d'entrée MTE comporte autant de positions de 8 bits qu'il y a de voies d'échange dans une trame et son adressage est commandé sélectivement par le compteur d'intervalles de temps CNT ou une mémoire de pointeurs d'entrée MPE qui contient autant de positions qu'il y a de voies sur une liaison multiplex entrante LME. Le commutateur temporel de sortie comprend principalement une mémoire tampon de sortie MTS dont l'entrée est reliée à l'anneau et dont la sortie est reliée à la liaison multiplex sortante LMS. La mémoire MTS contient autant de position qu'il y a de voies d'échange dans une trame et son adressage est commandé sélectivement par le compteur CNT ou une mémoire de pointeurs de sortie MPS. Le commutateur temporel local comprend principalement une mémoire tampon locale MTL dont l'entrée est reliée à la liaison multiplex entrante LME et dont la sortie est reliée à la liaison multiplex sortante LMS. La mémoire MTL est similaire à la mémoire MTS et son adressage est commandé sélectivement par le compteur CNT ou une mémoire de pointeurs locaux MPL. Sur la fig. 2, les différents éléments des modules de commutation MC-1, MC-2 et MC-N ont été identifiés par les suffixes 1, 2 et N respectivement.

Le réseau de connexion illustré sur la fig. 2 offre de larges possibilités de commutation de voies de données et de voix et on en décrira ci-après un exemple typique.

Communication bidirectionnelle entre deux stations attachées respectivement à deux modules de commutation différents.

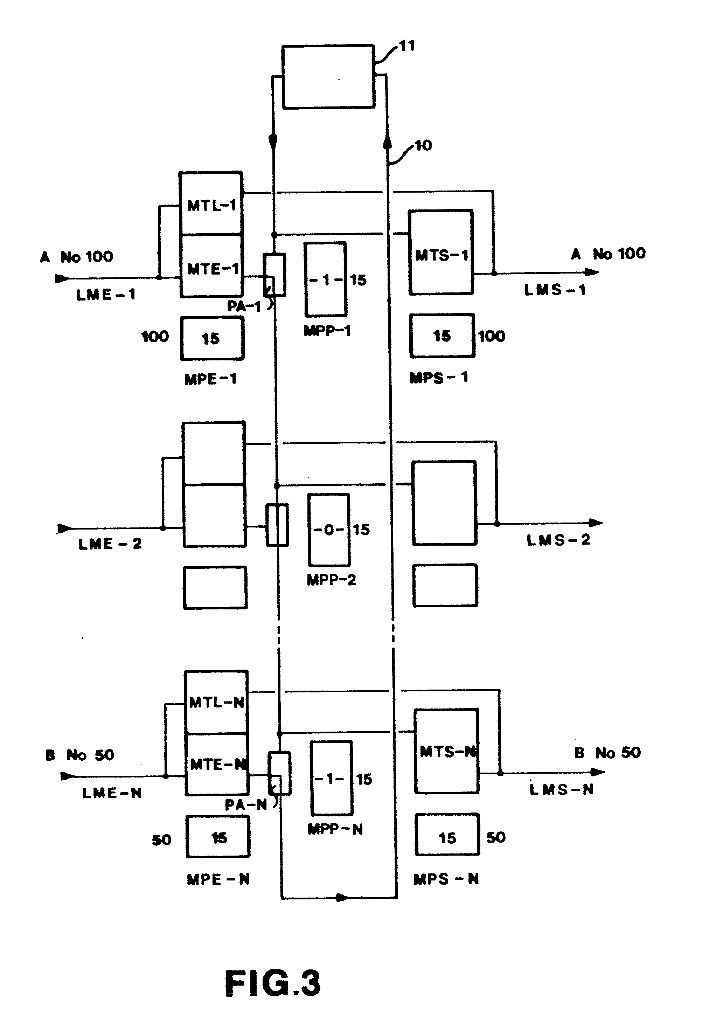

La fig. 3 illustre schématiquement la connexion entre deux stations A et B attachées respectivement aux modules de commutation MC-1 et MC-N. On supposera que le contrôleur 20 qui gère le réseau de connexion a affecté la voie 100 dans les liaisons multiplex LME-1 et LMS-1 à la station A et la voie 50 sur les liaisons multiplex LME-N et LMS-N à la station B. Pour établir la connexion entre les stations A et B, le contrôleur 20 doit trouver une voie d'échange libre sur l'anneau. On supposera que la voie d'échange 15 a été trouvée libre et affectée à cette connexion. Les différentes mémoires de pointeurs sont chargées comme suit:

– la quinzième position des mémoires de pointeurs de porte MPP-1 et MPP-N est mise à «1», et la quinzième position des autres mémoires de pointeurs de porte du réseau est mise à «0»; et

– l'adresse 15 est inscrite dans la position 100 des mémoires de pointeurs MPE-1 et MPS-1, et dans la position 50 des mémoires de pointeurs MPE-N et MPS-N.

Connexion A vers B.

Dans chacun des modules de commutation, le compteur d'intervalles de temps CNT est synchronisé avec l'apparition des voies d'échange sur l'anneau et des voies sur les liaisons multiplexes LME et LMS.

Pendant un cycle donné de 125 microsecondes, par exemple le cycle n, lorsque le compteur CNT-1 atteint la valeur 100, il adresse la position 100 de la mémoire de pointeurs d'entrée MPE-1, le pointeur d'entrée lu de cette position adresse la position 15 de la mémoire tampon d'entrée MTE-1, et l'octet en provenance de la station A sur la voie 100 de la liaison LME-1 est stocké dans la position 15 de la mémoire tampon d'entrée MTE-1. Au cycle suivant, lorsque le compteur CNT-1 atteint la valeur 15, il adresse la quinzième position de la mémoire de pointeurs de porte MPP-1, le pointeur de porte qui en est lu commande la porte d'anneau PA-1 de façon à ce qu'elle relie la sortie de la mémoire tampon d'entrée MTE-1 à l'anneau, et le contenu de la quinzième position de la mémoire MTE-1 est placé sur la voie d'échange 15. Lorsque la voie d'échange 15 atteint le module de commutation MC-N, son contenu est stocké dans la position 15 de la mémoire tampon de sortie MTS-N sous le contrôle du compteur CNT-N. Au cycle suivant, lorsque le compteur CNT-N atteint la valeur 50, il adresse la position 50 de la mémoire de pointeurs MPS-N, le pointeur de sortie qui en est lu adresse la position 15 de la mémoire tampon de sortie MTS-N et son contenu, c'est-à-dire l'octet en provenance de la station A est placé sur la voie 50 de la liaison LMS-N à destination de la station B. Le processus décrit ci-dessus est répété à chaque cycle jusqu'à ce que la connexion A-B soit interrompue.

Connexion B vers A.

La connexion B vers A est réalisée de façon similaire à la connexion A vers B, mais il faut noter que les eux connexions utilisent la même voie d'échange 15. Dans notre exemple, lorsque la voie d'échange 15 se présente au niveau du module de commutation MC-N l'octet en provenance de A qui y était contenu est transféré à la station B comme décrit ci-dessus et est remplacé par un octet qui provient de la station B à travers la porte d'anneau PA-N, la mémoire tampon d'entrée MTE-N et la voie 50 sur la liaison LME-N. La voie d'échange 15 qui contient maintenant l'octet en provenance de la station B est propagée le long de l'anneau et à travers le dispositif de bouclage 11 et son contenu est chargé dans la position 15 de la mémoire tampon de sortie MTS-1 pour transfert à la station A sur la voie 100 de la liaison LMS-1.

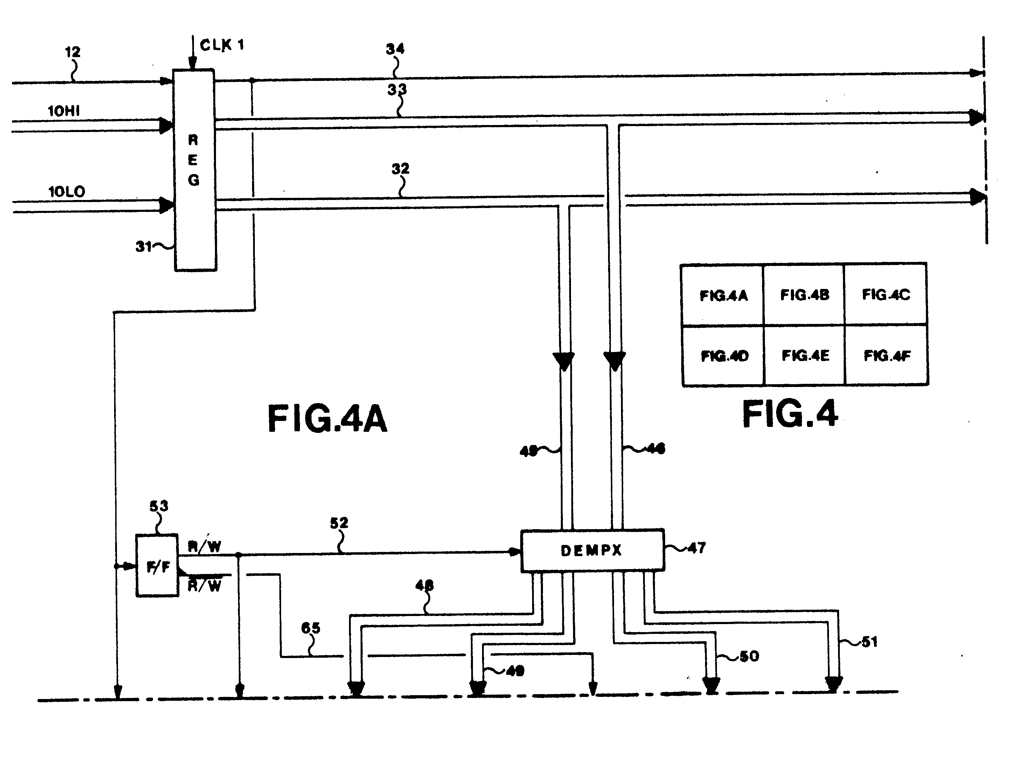

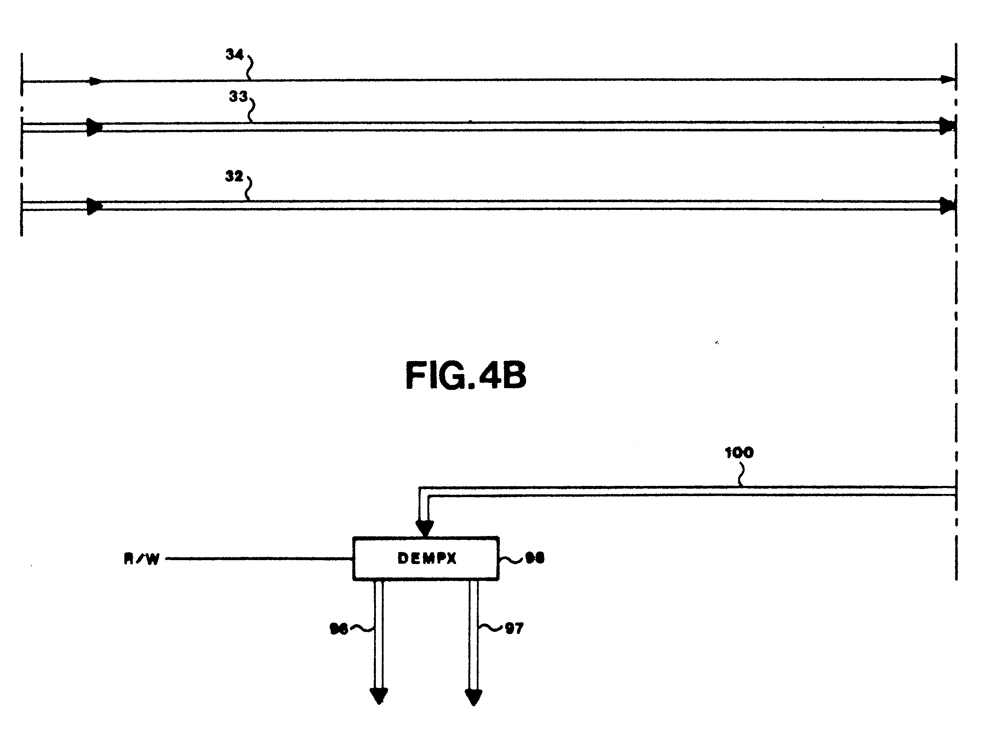

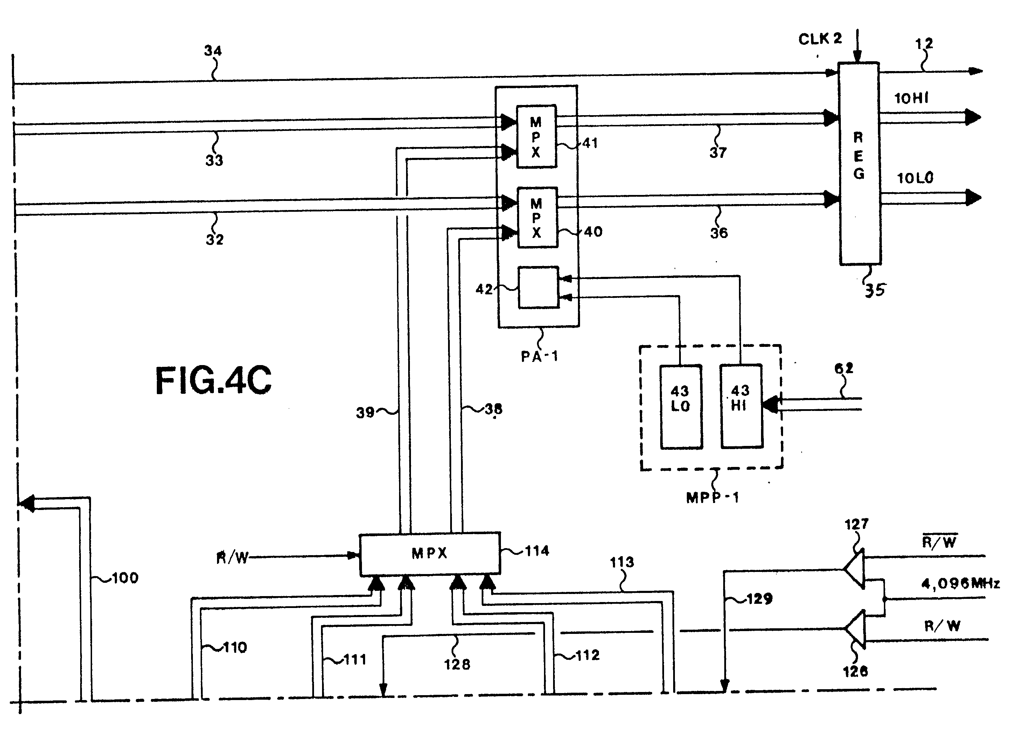

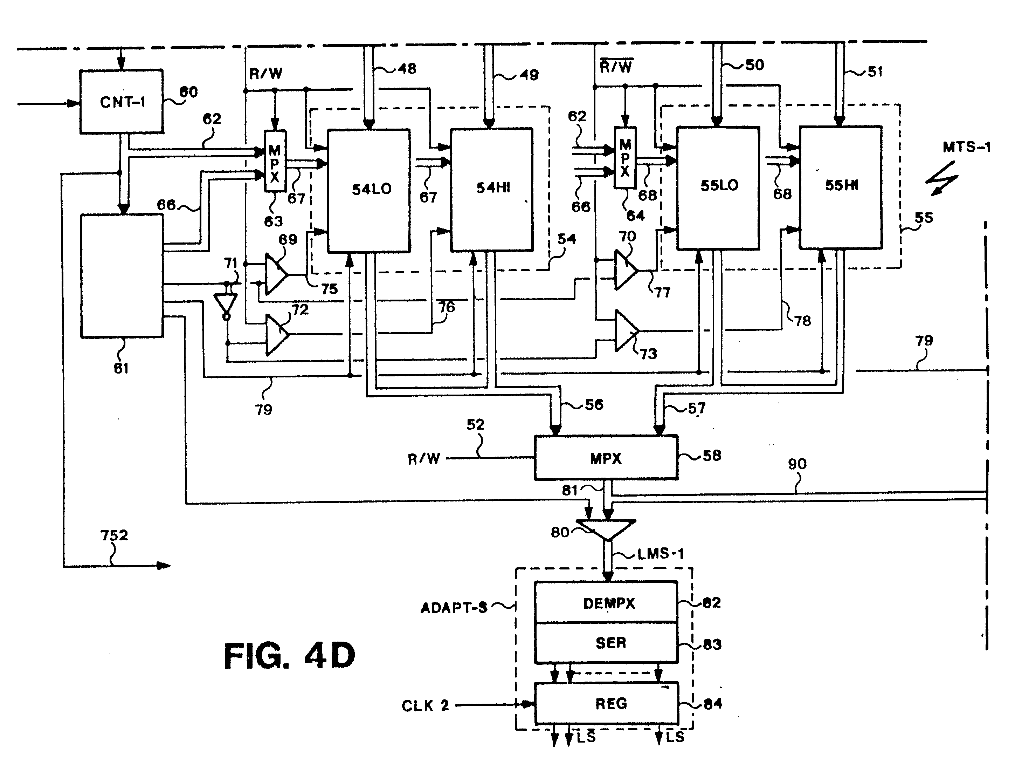

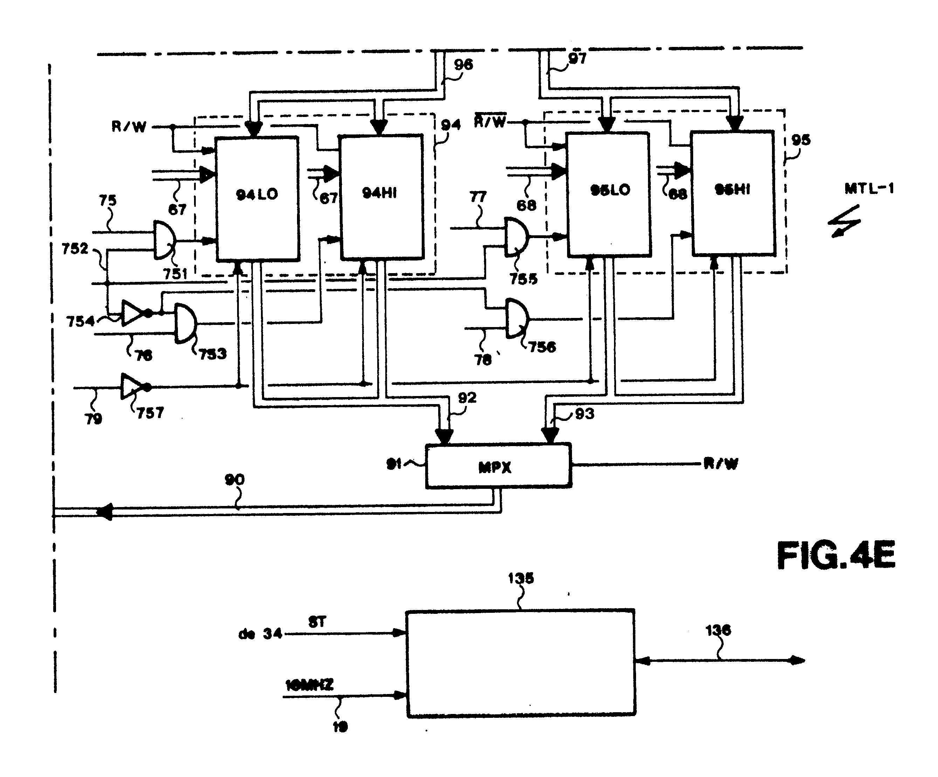

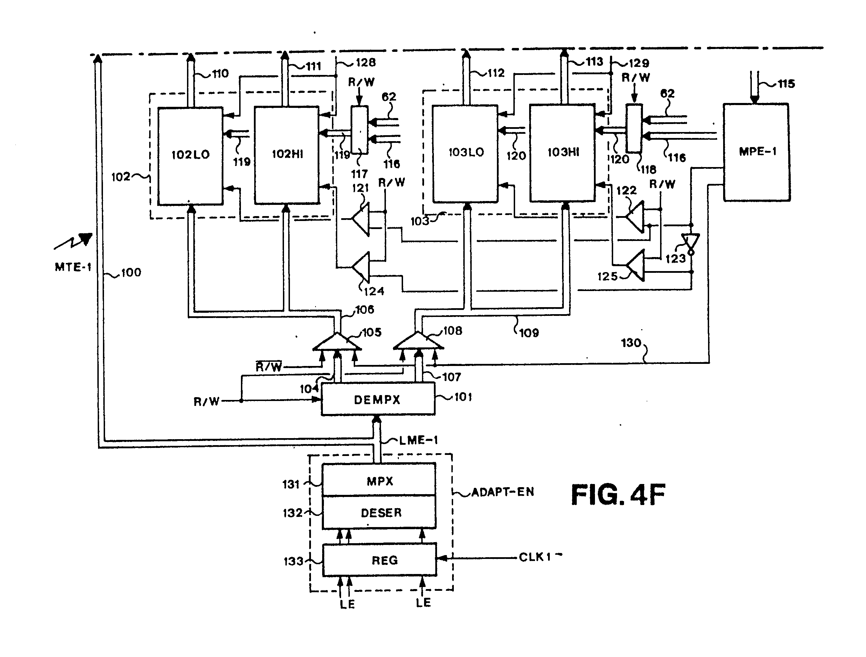

On a représenté sur la fig. 4 qui est constituée de l'assemblage des fig. 4A-4F, le bloc diagramme détaillé d'un module de commutation, par exemple celui du module de commutation MC-1. Dans le mode de réalisation décrit dans cette figure, l'anneau 10 transporte deux voies d'échange en parallèle et est constitué par un bus à seize fils qui permet de transporter en parallèle et simultanément deux octets de huit bits. Dans un souci de clarté, on a représenté sur la fig. 4, le bus à seize fils par deux bus à huit fils référencés 10LO et 10HI. Chaque trame e 125 microsecondes est divisée en 256 intervalles de temps dits d'échange, et pendant chacun de ces intervalles de temps d'échange chacun des bus 10LO et 10HI transporte une voie d'échange d'un octet. L'ensemble des bus 10LO et 10HI est bien équivalent à un bus fonctionnant en multiplex temporel avec des trames de 125 microsecondes à 512 voies d'échanges. L'avantage de l'arrangement à deux bus parallèles décrit ci-dessus est qu'il ramène le débit binaire sur chaucn des fils à 2,048 Mbps et la durée d'un intervalle de temps d'échange à 488 nanosecondes.

Le contenu des bus 10LO et 10HI amont et celui de la ligne de synchronisation 12 amont sont chargés dans un registre d'entrée à dix sept étages 31 sous le contrôle d'un signal de chronologie à 2,048 MHz CLK1. Les sorties du registre 31 qui correspondent aux bus 10LO et 10HI amont sont reliées respectivement à deux bus à huit fils 32 et 33 qui sont appliqués à la porte d'anneau PA-1. La sortie du registre 31 qui correspond à la ligne de synchronisation 12 amont est reliée par une ligne 34 à une des dixsept entrées d'un registre de sortie 35 qui reçoit aussi deux bus à huit fils 36 et 37 reliés à la sortie de la porte d'anneau PA-1. Le contenu de la ligne 34 et des bus 36 et 37 est chargé dans le registre 35 sous le contrôle d'un signal de chronologie à 3,048 MHz CLK2. Les sorties du registre 35 qui correspondent à la ligne 34 et aux bus 36 et 37 sont reliées respectivement à la ligne de synchronisation 12 aval et aux bus 10LO et 10HI aval.

La porte d'anneau PA-1 qui reçoit aussi deux bus à huit fils 38 et 39 comprend principalement deux multiplexeurs 40 et 41. Le multiplexeur 40 connecte sélectivement l'un des bus 32 et 38 au bus 36 et le multiplexeur 41 connecte sélectivement l'un des bus 33 et 39 au bus 37. La porte d'anneau PA-1 comprend en outre un arrangement de portes logiques 42 qui commande les multiplexeurs 40 et 41 en fonction du contenu des bus 32, 33, 38 et 39 et de la valeur de deux pointeurs de porte LO et LI comme expliqué plus loin.

Les pointeurs de porte LO et HI sont contenus dans la mémoire de pointeurs de porte MPP-1 (fig. 2) qui est constituée par deux modules de mémoire 256×1 bits 43LO et 43HI, qui contiennent respectivement les pointeurs de porte LO et HI qui correspondent aux voies d'échange sur les bus LO et HI. Les pointeurs de porte LO et HI lus de la mémoire de pointeurs de porte MPP-1 sont appliqués à l'arrangement de portes logiques 42.

Les bus 32 et 33 sont reliés respectivement par deux bus 45 et 46 à l'entrée d'un démultiplexeur 47 qui relie sélectivement la paire de bus 45, 46 à une paire de bus 48, 49 ou à une paire de bus 50, 51 sous le contrôle d'un signal R/W qu'il reçoit par une ligne 52. La ligne 52 est reliée à la sortie vraie d'une bascule de type flip-flop 53 dont l'entrée reçoit le signal de synchronisation de trame ST sur la ligne 34. Les deux paires de bus 48, 49 et 50, 51 sont appliquées à la mémoire tampon de sortie MTS-1 (fig. 2) qui comprend deux mémoires tampons 54 et 55 fonctionnant en mode dit flip-flop qui sera expliqué plus loin. Les mémoires tampons 54 et 55 sont elles-mêmes constituées par deux modules de mémoire 256×8 bits référencés 54LO, 54HI et 55LO, 55HI respectivement. Les bus 48, 49, 50 et 51 sont appliqués respectivement à l'entrée de données des modules de mémoires 54LO, 54HI, 55LO et 55HI. Les sorties de données des modules de mémoire 54LO et 54HI sont reliées entre elles et à un bus à huit fils 56. Les sorties de données des modules de mémoire 55LO et 55HI sont reliées entre elles et à un bus à huit fils 57. Les bus 56 et 57 sont appliqués à un multiplexeur 58 commandé par le signal R/W sur la ligne 52. L'entrée lecture/écriture des modules de mémoire 54LO et 54HI reçoit le signal R/W sur la ligne 52 et les entrées lecture/écriture des modules de mémoire 55LO et 55HI reçoivent par une ligne 65 le signal R/W fourni par le sortie complémentaire de la bascule 53.

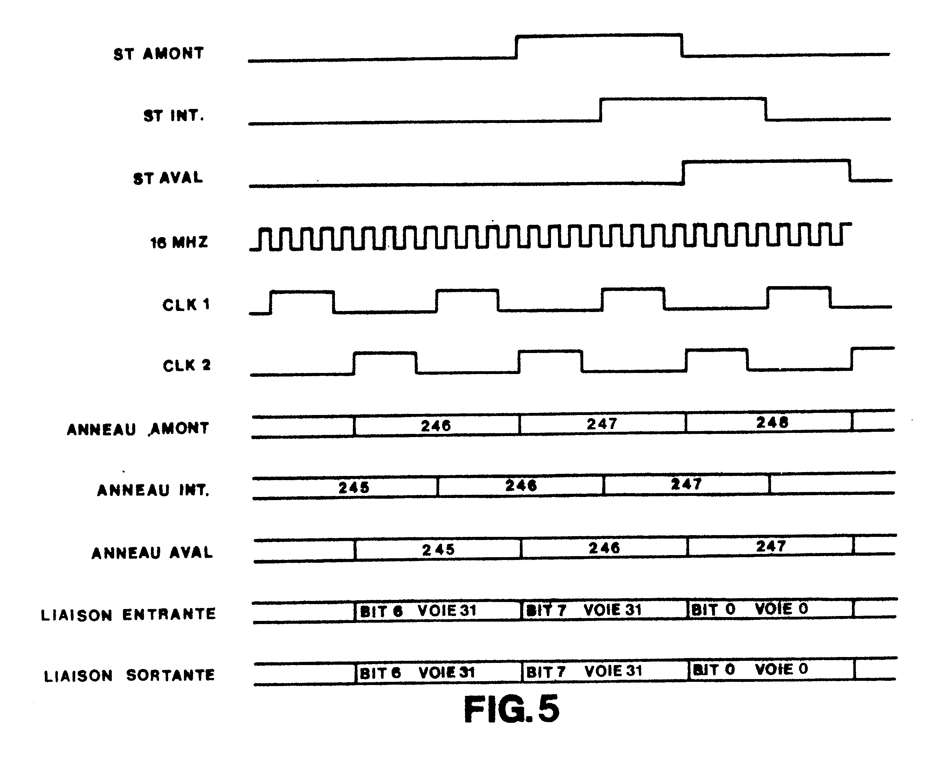

La mémoire tampon de sortie MTS-1 est adressée par un compteur d'intervalles de temps CNT-1 60 et une mémoire de pointeurs 61 qui réalise la fonction des mémoires de pointeurs MPS-1 et MPL-1 des fig. 2 et 3. Le compteur 60 est un compteur à neuf étages qui compte des impulsions à 4,096 MHz et qui définit ainsi $2^9 = 512$ intervalles de temps de 244 nanosecondes. Le compteur 60 est synchronisé par le signal de synchronisation de trame ST sur la ligne 34. Le signal de synchronisation ST force le contenu du compteur 60 à la valeur 247 pour des raisons qui seront expliquées plus loin en référence à la fig. 5. Les huit bits de plus fort poids du compteur 60, sont appliqués par un bus 62 à deux multiplexeurs 63 et 64 commandés respectivement par le signal R/W et le signal R/W. Les neuf bits du compteur 60 sont utilisés pour adresser la mémoire de pointeurs 61 qui contient 512 positions de mémoire, chacune d'elles pouvant emmagasiner un pointeur de sortie/local à onze bits dont la composition est la suivante:

– huit bits d'adresse
– un bit LO/HI
– un bit Local
– un bit de marquage de sortie.

Les huit bits d'adresse lus de la mémoire de pointeurs 61 sont appliqués par un bus 66 à l'autre entrée du multiplexeur 63 dont la sortie est reliée à l'entrée d'adresse des modules 54LO et 54HI par un bus 67, et à l'autre entrée du multiplexeur 64 dont la sortie est reliée à l'entrée d'adresse des modules de mémoire 55LO et 55HI par un bus 68. Le bit LO/HI lu de la mémoire de pointeurs 61 est appliqué à une entrée d'une porte ET 69 dont l'autre entrée reçoit le signal R/W, à une entrée d'une porte ET 70 dont l'autre entrée reçoit le signal R/W, et à un inverseur 71. La sortie de l'inverseur 71 est appliquée à une entrée d'une porte ET 72 dont l'autre l'entrée reçoit le signal R/W et à une entrée d'une porte ET 73 dont l'autre entrée reçoit le signal R/W. Les sorties des portes ET 69, 72, 70 et 73 sont appliquées respectivement à l'entrée de sélection des modules de mémoire 54LO, 54HI, 55LO et 55HI par des lignes 75, 76, 77 et 78 respectivement. Le bit Local lu de la mémoire de pointeurs 61 est appliqué par une ligne 79 à l'entrée de porte de sortie de données des modules de mémoire 54LO, 54HI, 55LO et 55HI. Le bit de marquage de sortie lu de la mémoire de pointeurs 61 est appliqué à une porte 80 qui reçoit aussi par un bus 81 la sortie du multiplexeur 58. La sortie de la porte 80 est reliée à un bus à huit fils qui constitue la liaison multiplex sortante LMS-1 de la fig. 2.

Le bus LMS-1 est appliqué à l'adaptateur de sortie ADAPT-S (fig. 2) qui comprend un démultiplexeur 82, un convertisseur parallèle-série 83 à seize sorties et un registre à seize étages 84. Les seize sorties du convertisseur parallèle-série 83 sont chargées dans le registre 84 sous le contrôle du signal de chronologie CLK2. Les seize sorties du registre 84 sont reliées aux seize liaisons d'interface sortantes LS (fig. 2). Le démultiplexeur 82 réalise le démultiplexage des 512 voies sur le bus LMS-1 en seize liaisons à 32 voies. Il comprend de façon connue un commutateur à seize positions commandé par un signal de chronologie à 4,096 MHz, chacune de ces positions permettant le chargement parallèle du contenu du bus LMS-1 dans un registre à huit étages. Les seize registres du démultiplexeur 82 seront lues en parallèle et séquentiellement à un rythme de 256 KHz dans les seize registres à décalage du convertisseur 83. Chacun des registres à décalage est alors vidé en série au rythme de 2,048 MHz sur l'une des liaisons d'interface sortante LS. La correspondance entre les voies sur le bus LMS-1 et les voies sur les liaisons LS est représentée dans le tableau I ci-dessous.

Tableau I

| LMS-1 Voie No | 0 | 1 | 2 | ... | 15 | 16 | ..... | 510 | 511 |
|---|---|---|---|---|---|---|---|---|---|
| LS Voie No | | 0 | 0 | ... | 0 | 1 | ..... | 31 | 31 |
| LS No | | 1 | 2 | ... | 16 | 1 | ..... | 15 | 16 |

Le bus 81 est relié par un bus 90 à la sortie d'un multiplexeur 91 dont les entrées sont reliées à deux bus 92 et 93 et qui est contrôlé par le signal R/W. Les bus 92 et 93 sont reliés à la sortie de la mémoire tampon locale MTL-1 dont la réalisation est semblable à celle de la mémoire tampon de sortie MTS-1. Elle comprend deux mémoires tampons 94 et 95 fonctionnant en mode flip-flop, chacune d'elles comprenant deux modules de mémoire 256×8 bits référencés 94LO, 94HI et 95LO, 95HI. Le bus 92 est relié à la sortie de données des modules de mémoire 94LO et 94HI. Le bus 93 est relié à la sortie de données des moules de mémoire 95LO et 95HI. Les entrées de données des modules de mémoires 94LO et 94 sont reliées entre elles et à un bus 96. Les entrées de données de modules de mémoire 95LO et 95HI sont reliées entre elles et à un bus 97. Les bus 96 et 97 sont reliés aux sorties d'un démultiplexeur 98 commandé par le signal R/W. L'entrée lecture/écriture des modules de mémoire 94LO et 94HI reçoit le signal R/W sur la ligne 52 et l'entrée lecture/écriture des modules de mémoire 95LO et 95HI reçoit le signal R/W sur la ligne 65. L'entrée d'adresse des modules de mémoire 94LO et 94HI reçoit le bus 67 et l'entrée d'adresse des modules de mémoire 95LO et 95HI reçoit le bus 68. L'entrée de sélection du module de mémoire 94LO reçoit la sortie d'une porte OU 751 qui reçoit comme entrées la ligne 75 et le bit de plus faible poids du compteur 60 qui lui est appliqué par une ligne 752. L'entrée de sélection du module de mémoire 94HI reçoit la sortie d'une porte OU 753 qui reçoit comme entrées la ligne 76 et la ligne 752 inversée par un inverseur 754. L'entrée de sélection du module de mémoire 95LO reçoit la sortie d'une porte OU 755 qui reçoit comme entrées les lignes 77 et 752. L'entrée de sélection du module de mémoire 95HI reçoit la sortie d'une porte OU 756 qui reçoit comme entrées la ligne 78 et la sortie de l'inverseur 754. L'entrée de porte de sortie des données de modules 94LO, 94HI, 95HO et 95HI est reliée à la sortie d'un inverseur 757 dont l'entrée reçoit la ligne 79.

Le démultiplexeur 98 a son entrée reliée par un bus 100 à un bus à huit fils qui constitue la liaison multiplex entrante LME-1 de la fig. 2. Le bus LME-1 est appliqué à travers un démultiplexeur 101 à la mémoire tampon d'entrée MTE-1 qui est réalisée de façon semblable à celle des mémoires MTL-1 et MTS-1. La mémoire MTE-1 est constituée par deux mémoires tampon 102 et 103, chacune d'elles comprenant deux modules de mémoire 256×8 bits, référencés 102LO, 102HI et 103LO et 103HI. Une première sortie du démultiplexeur 101 est reliée à un bus 104 qui est appliqué à une porte ET 105 dont la sortie est appliquée par un bus 106 à l'entrée de données des modules de mémoire 102LO et 102HI. La seconde sortie du démultiplexeur 101 est reliée à un bus 107 qui est appliqué à une porte ET 108 dont la sortie est appliquée par un bus 109 à l'entrée de données des modules de mémoire 103LO et 103HI.

Les sorties de données des modules de mémoire 102LO, 102HI, 103LO et 103HI sont appliquées respectivement par les bus 110, 111, 112 et 113 à un multiplexeur 114 qui est commandé par le signal R/W et dont la sortie est reliée aux bus 38 et 39.

La mémoire tampon d'entrée MTE-1 est adressée par le compteur d'intervalles de temps 60 et la mémoire de pointeurs d'entrée MPE-1. La mémoire de pointeurs d'entrée MPE-1 contient 512 positions de mémoire, chacune d'elles pouvant emmagasiner un pointeur d'entrée à dix bits dont la composition est la suivante:

– huit bits d'adresse,
– un bit LO/HI, et
– un bit de marquage d'entrée

La mémoire de pointeurs MPE-1 est adressée par les neuf bits du compteur 60 qu'elle reçoit par un bus 115. Les huit bits d'adresse lus de la mémoire de pointeurs MPE-1 sont appliqués par un bus 116 à deux multiplexeurs 117 et 118 qui reçoivent aussi le bus 62 du compteur 60 et qui sont respectivement commandés par les signaux R/W et R/W. La sortie du multiplexeur 117 est appliquée par un bus 119 à l'entrée d'adresse des modules de mémoire 102LO et 102HI, et la sortie du multiplexeur 118 est appliquée par un bus 120 à l'entrée d'adresse des modules de mémoire 103LO et 103HI. Le bit LO/HI lu de la mémoire de pointeurs MPE-1 est appliqué à une entrée de deux portes ET 121 et 122 qui reçoivent respectivement sur leur entrée les signaux R/W et R/W. Le bit LO/HI est inversé par un inverseur 123 dont la sortie est appliquée à une entrée de deux portes ET 124 et 125 qui reçoivent respectivement sur leur autre entrée les signaux R/W et R/W. Les sorties des portes ET 121, 124, 122 et 125 sont appliquées respectivement à l'entrée de sélection des modules de mémoire 102LO, 102HI, 103LO et 103HI. La mémoire tampon d'entrée MTE-1 est pourvue d'un dispositif de remise à zéro après lecture qui permet, de façon connue de mettre à zéro une position de mémoire après sa lecture. Ce dispositif comprend une porte ET 126 qui reçoit le signal R/W et le signal de chronologie à 4,096 MHz et une porte ET 127 qui reçoit le même signal de chronologie et le signal R/W. La sortie de la porte ET 126 est reliée par une ligne 128 à l'entrée lecture/écriture des modules de mémoire 102LO et 102HI. La sortie de la porte ET 127 est reliée par une ligne 129 à l'entrée lecture/écriture des modules de mémoire 103LO et 103HI. Le bit de marquage d'entrée lu de la mémoire de pointeurs MPE-1 est appliqué par une ligne 130 à une entrée des portes ET 105 et 108 qui reçoivent aussi respectivement les signaux $\overline{R/W}$ et R/W.

Les bus LME-1 est connecté à la sortie de l'adaptateur d'entrée ADAPT-EN (fig. 2) qui a une structure réciproque de celle de l'adaptateur de sortie ADAPT-S et qui comprend un multiplexeur 131 et un convertisseur série-parallèle 132 dont les seize entrées sont reliées aux seize sorties d'un registre 133 sous le contrôle du signal CLK1. Les entrées du registre 133 sont reliées aux seize liaisons d'interface entrantes LE (fig. 2).

Les mémoires de pointeurs 61, MPE-1 et MPP-1 sont écrites sous le contrôle d'un dispositif de commande et de chronologie 135 qui reçoit le signal de synchronisation de trame ST sur la ligne 34 et le signal de chronologie à 16,384 MHz sur la ligne 19 et est relié au contrôleur 20 par une liaison bidirectionnelle série 136. On trouvera un exemple de réalisation du dispositif 135 dans la demande de brevet européen (FR 980 011) déposée conjointement à celle-ci par la demanderesse.

On décrira maintenant le fonctionnement du module de commutation MC-1 illustré sur la fig. 4. Le module de commutation réalise principalement quatre fonctions qui sont:

– Interception d'une voie d'échange
– Connexion entrante
– Connexion sortante
– Connexion locale

Interception d'une voie d'échange

Avant de décrire comment on intercepte une voie d'échange sur l'anneau, on décrira comment les voies d'échange circulent le long de l'anneau en se référant au diagramme de la fig. 5. Les signaux de chronologie CLK1 et CLK2 sont des signaux à 2,048 MHz, le signal CLK2 étant retardé d'une demi-période par rapport au signal CLK1. Les voies d'échange, par exemple 246, sur les bus HI et LO de l'anneau amont se présentent à l'entrée du module de commutation MC-1 (c'est-à-dire à l'entrée du registre 31) pendant l'intervalle de temps défini par le signal CLK2 du module de commutation précédent. Le contenu des voies d'échange 246 est chargé dans le registre 31 à la transition positive suivante du signal CLK1 et reste présent dans le registre jusqu'à la nouvelle transition positive du signal CLK1, c'est-à-dire pendant la durée d'un intervalle de temps d'échange. Le contenu du registre 31 (en négligeant l'effet de la porte d'anneau PA-1) est chargé dans le registre 35 et est ainsi appliqué à l'anneau aval, à la transition positive suivante du signal CLK2. Le module de commutation introduit donc un retard égal à un intervalle de temps d'échange dans la circulation des voies d'échange le long de l'anneau. C'est pour tenir compte de ce retard que le signal de synchronisation de trame ST sur la ligne 12 est aussi retardé d'un même intervalle de temps au moyen des registres 31 et 35.

Les trames sur l'anneau, sur les liaisons d'interfaces entrantes et sortantes et sur les liaisons multiplex entrantes et sortantes sont synchrones entre elles. Afin d'avoir un système synchrone au niveau des liaisons d'interfaces entrantes et sortantes, c'est-à-dire afin que par exemple la voie 31 sur la liaison d'interface sortante soit présente sur cette liaison d'interface sortante en même temps que la voie 31 sur la liaison d'interface entrante correspondante est présente sur cette dernière voie, et afin de tenir compte du retard introduit par le traitement d'une voie dans le module de commutation, le signal de synchronisation de trame ST n'apparaît pas avec l'intervalle de temps d'échange 0 mais avec l'intervalle de temps d'échange 247. C'est pourquoi le compteur 60 n'est pas remis à zéro par le signal de synchronisation de trame et ce dernier force le contenu du compteur 60 à la valeur 247.

L'interception d'une voie d'échange par le module de commutation MC-1 est réalisée par la porte d'anneau PA-1 qui est commandée par les pointeurs de porte stockés dans la mémoire de pointeurs MPP-1. Celle-ci est adressée par les huit bits de plus fort poids du compteur d'intervalles de temps 60 qui fournissent en séquence 256 adresses distinctes à un rythme d'une adresse toutes les 488 nanosecondes, c'est-à-dire au rythme des intervalles de temps d'échange, ce compteur est synchronisé avec le chargement du contenu des voies d'échange dans le registre 31 par le signal de synchronisation de trame ST. L'adresse fournie par le compteur 60 est appliquée en parallèle à chacun des modules de mémoire 43LO et 43HI de sorte qu'à chaque intervalle de temps d'échange, la mémoire de pointeurs MPP-1 fournisse simultanément les pointeurs de porte LO et HI qui correspondent aux voies d'échange sur les bus 32 et 33. Les pointeurs de porte LO et HI commandent la porte PA-1 comme illustré dans le tableau II ci-après. Si par exemple le pointeur de porte LO 246 a la valeur 1, ce qui indique que la voie d'échange 246 sur le bus LO doit être interceptée, le multiplexeur 40 déconnecte le bus 32 du bus 36 et connecte le bus 38 au bus 36, et ce pendant la durée de l'intervalle de temps d'échange 246. Le contenu du bus 38 est ainsi placé dans la voie d'échange 246 LO pour transfert sur l'anneau aval. Si le pointeur de porte LO 246 a la valeur 0, l'état de la porte d'anneau PA-1 est commandé par le contenu de la voie d'échange 246 sur le bus 32 et le contenu du bus 38 comme indiqué sur le tableau II ci-dessous.

Tableau II

| Pointeur de porte LO (pointeur de porte HI) | Contenu bus 32 (contenu bus 33) | Contenu bus 38 (contenu bus 39) | Connexion |
|---|---|---|---|
| 1 | Indifférent | Indifférent | 38–36 (39–37) |
| 0 | Zéro | Zéro | 32–36 (33–37) |
| 0 | Non Zéro | Zéro | 32–36 (33–37) |
| 0 | Zéro | Non Zéro | 38–36 (39–37) |
| 0 | Non Zéro | Non Zéro | 32–36 (33–37) |

Dans un mode de réalisation simplifié, on pourrait concevoir un fonctionnement binaire de la porte d'anneau, indifférent au contenu des bus. Il ne serait pas alors nécessaire de prévoir l'arrangement de portes 42 et les pointeurs de porte commanderaient directement les multiplexeurs 40 et 41. Dans le mode de réalisation de la fig. 4, l'arrangement 42 dont le fonctionnement est illustré par le Tableau II a été prévu pour permettre au réseau d'établir une connexion de collecte comme décrit dans la demande de brevet européen (FR 980 011) précitée, et pour permettre au système de détecter certaines conditions d'erreur. Pour établir une connexion de collecte, la porte d'anneau PA-2 qui correspond à la première station émettrice sur la boucle est commandée de façon à réaliser l'interception de la voie d'échange 15; le pointeur de porte correspondant est 1. La porte PA-N qui correspond à la station B doit être commandée de façon que, si la station C transmet un octet alors que la station B est silencieuse, elle soit transparente à la voie d'échange 15, et si la station B transmet un octet alors que la station C est silencieuse elle réalise une interception de la voie d'échange 15; la commande de la porte d'anneau dans les deux situations ci-dessus est illustré par les rangées 2 et 4 du tableau II. Si la station B essaye de transmettre un octet sur la voie d'échange 15 alors que celle-ci est déjà occupée, priorité est donnée au contenu initial de la voie d'échange 15 comme illustré par la dernière rangée du tableau II; une condition d'erreur est alors reportée au contrôleur 20.

Connexion entrante

Une connexion entrante permet de transférer un octet en provenance d'une voie sur une des liaisons d'interface entrantes sur une voie d'échange sur l'anneau. Un tel transfert est réalisé au moyen de la mémoire tampon d'entrée MTE-1. Les 512 voies sur la liaison multiplex entrante, qui résultent du multiplexage des voies sur les liaisons d'interface entrantes sont emmagasinées dans la mémoire MTE-1 aux adresses spécifiées par les pointeurs d'entrée, et le contenu de cette mémoire en est lu séquentiellement sous le contrôle du compteur d'intervalles de temps 60. En pratique, l'une des deux mémoires tampon 102 et 103 est écrite pendant toute la durée d'une trame pendant que l'autre est lue sur l'anneau, puis la mémoire tampon qui vient d'être écrite est lue, et ainsi de suite. Un tel mode de fonctionnement est dit flip-flop.

On supposera que pendant une trame particulière, par exemple la trame n, la mémoire tampon 102 est écrite alors que la mémoire tampon 103 est lue. Pendant toute la durée de la trame n, le signal R/W fourni par la sortie vraie de la bascule 53 est bas, et le démultiplexeur 101 relie le bus LME-1 au bus 104, le multiplexeur 114 connecte la paire de bus 112, 113 à la paire de bus 38, 39 et le multiplexeur 117 connecte la sortie de la mémoire de pointeurs d'entrée MPE-1 à l'entrée d'adresse des modules de mémoire 102LO et 102HI. Le signal R/W étant bas, il force la sortie de la porte ET 126 au niveau bas, ce qui met les modules de mémoire 102LO et 102HI en mode écriture. Le signal $\overline{R/W}$ est au niveau haut et conditionne les portes ET 105, 121 et 124. Le contenu des voies sur le bus LME-1 est emmagasiné dans la mémoire tampon 102LO comme expliqué ci-dessous à l'aide d'un exemple. On suppose que le contenu de la voie 46 sur le bus LME-1 doit être transféré sur la voie d'échange 65 du bus HI. Lorsque la voie 46 se présente sur le bus LME-1, le compte défini par les neuf bits du compteur 60 a atteint la valeur 46 et le pointeur d'entrée stocké dans la 46ième position de la mémoire de pointeurs en est lu. Ce pointeur d'entrée a la configuration suivante:

| Adresse | LO/HI | Marquage |
|---|---|---|
| 01000001 | 1 | 1 ou 0 |

Le champ d'adresse spécifie l'adresse 65 qui est appliquée aux modules de mémoire 102LO et 102HI. Le bit LO/HI étant à 1, inversé par l'inverseur 123, il force un niveau bas à l'entrée de sélection du module 102HI le sélectionnant. Le module de mémoire 102LO n'est pas sélectionné. Si le bit de marquage est 1, la porte 105 est conditionnée et le contenu de la voie 46 sur le bus LME-1 est chargé dans la position 65 du module de mémoire 102HI. Si le bit de marquage est 0, il déconditionne la porte ET 105 et un octet zéro est chargé dans cette position de mémoire.

Pendant la trame N+1, le signal R/W est haut, le démultiplexeur 101 connecte le bus LME-1 au bus 107, le multiplexeur 114 relie la paire de bus 110, 111 à la paire de bus 38, 39, et le multiplexeur 117 relie la bus 62 constitué par les huit bits de plus fort poids du compteur 60 à l'entrée d'adresse des modules de mémoire 102LO et 102HI. Le signal $\overline{R/W}$ est bas et sélectionne les deux modules de mémoire à travers les portes ET 121 et 124. Les deux modules de mémoire 102LO et 102HI sont lus simultanément et séquentiellement sous le contrôle des huit bits de plus fort poids du compteur d'intervalles de temps 60, le contenu de la position 0 des modules LO et HI est placé dans la voie d'échange 0 sur les bus LO et HI, puis le contenu de la position 1, et ainsi de suite. Après qu'une position de mémoire ait été lue elle est mise à zéro comme expliqué ci-dessus. Pendant toute la durée de la trame N+1 le signal R/W est haut. Pendant la durée d'un intervalle de temps d'échange, le signal de chronologie à 4,096 MHz est successivement haut et bas. Pendant la première moitié d'un intervalle de temps d'échange, la sortie de la porte ET 126 est haute conditionnant les modules de mémoire 102LO et 102HI en mode lecture. Pendant la seconde moitié de cet intervalle de temps, la sortie de la porte ET 126 est basse conditionnant les modules de mémoire 102LO et 102HI en mode écriture, le signal R/W est bas forçant la sortie de la porte ET 105 à un niveau bas et un octet zéro est écrit dans les positions de mémoire adressées qui viennent d'être lues.

### Connexion sortante

Une connexion sortante permet de transférer le contenu d'une voie d'échange sur l'anneau sur une voie de l'une des liaisons d'interface sortantes LS. Le contenu des voies d'échange est chargé dans la mémoire tampon de sortie MTS-1 sous le contrôle du compteur d'intervalles de temps 60 et le contenu de cette mémoire en est lu sous le contrôle des pointeurs de sortie/locaux stockés dans la mémoire de pointeurs 61. En pratique, la mémoire MTS-1 est constituée par deux mémoires tampons qui fonctionnent en mode flip-flop comme celles qui constituent la mémoire tampon d'entrée MTE-1.

On supposera que pendant la trame n, la mémoire tampon 54 est écrite pendant que la mémoire tampon 55 est lue. Le signal R/W est bas, le démultiplexeur 47 relie la paire de bus 45, 46 à la paire de bus 48, 49, le multiplexeur 58 relie le bus 57 au bus 81 et le multiplexeur 63 relie le bus 62 au bus 67 qui est appliqué à l'entrée d'adresse des modules de mémoire 54LO et 54HI. Le signal R/W étant bas il met ces modules de mémoire en mode écriture, et les sélectionne à travers les portes ET 69 et 72. Les deux modules de mémoire 54LO et 54HI sont écrits simultanément et séquentiellement sous le contrôle du compteur 60, le contenu des voies d'échange 0 sur les bus 32 et 33 étant stocké dans la position 0 des modules 54HO et 54HI, le contenu des voies d'échange 1 étant stocké dans la position 1 des modules 54HO et 54HI, et ainsi de suite. Pendant la trame n+1, le signal R/W est haut, le multiplexeur 58 relie le bus 56 au bus 81, le démultiplexeur 47 relie la paire de bus 45, 46 à la paire de bus 50, 51 et le multiplexeur 63 relie le bus 66 au bus 67 qui est appliqué à l'entrée d'adresse des modules 54LO et 54HI. Le signal R/W étant haut, il met les modules de mémoire 54LO et 54HI en mode lecture. Les modules de mémoire 54LO et 54HI sont lus comme expliqué ci-dessous. On suppose que le contenu de la voie d'échange 45 sur le bus LO, qui a été emmagasiné dans la position 45 du module 54LO doit être transféré sur la voie 300 sur le bus LMS-1. Lorsque le compte défini par les neuf bits du compteur 60 atteint la valeur 300, le pointeur de sortie/local emmagasiné à la position 300 de la mémoire de pointeurs 61 est lu. Ce pointeur a la configuration suivante:

| Adresse | LO/HI | Local | Marquage |
|---|---|---|---|
| 00101101 | 0 | 0 | 1 ou 0 |

Le champ d'adresse spécifie l'adresse 45 et le bit LO/HI spécifie le module 54LO. Le bit local étant à 0, il conditionne la porte de sortie de données des modules de mémoire de la mémoire tampon de sortie MTS-1. Si le bit de marquage est 1, la porte ET 80 est conditionnée et le contenu de la position 45 du module 54HO est placé sur le bus LMS-1. Si le bit de marquage est 0, la sortie de la porte ET 80 est forcée à zéro et un octet zéro est écrit sur le bus LMS-1.

### Connexion locale

Une connexion locale permet de transférer le contenu d'une voie de l'une des liaisons d'interface entrantes LE dans une voie de l'une des liaisons d'interface sortantes LS. Le contenu des 512 voies sur le bus LME-1 est systématiquement chargé dans la mémoire tampon locale MTL-1 sous le contrôle du compteur d'intervalles de temps 60 et le contenu de la mémoire est lu sous le contrôle des pointeurs de sortie/locaux. La mémoire MTL-1 a une structure semblable aux mémoires MTE-1 et MLT-1 et son fonctionnement ne sera pas décrit en détail.

Pendant la trame n, la mémoire tampon 94 est écrite comme expliqué ci-dessous. Pendant le premier intervalle de temps de 488 nanosecondes l'adresse 0 est appliquée par le bus 67 aux deux modules de mémoire 94LO et 94HI. Pendant la première moitié de cet intervalle de temps, le bit de plus faible poids du compteur 60, disponible sur la ligne 752, est 0, seul le module de mémoire 94LO est sélectionné et la voie 0 sur le bus LME-1 est chargée dans la position 0 du module de mémoire 94LO. Pendant la seconde moitié de cet intervalle de temps, le bit de plus faible poids du compteur 60 est 1, seul le module de mémoire 94HI est sélectionné et la voie 1 sur le bus LME-1 est chargée dans la position 0 du module de mémoire 94HI. Ce processus se répète pendant toute la durée de la trame n.

Pendant la trame n+1, la mémoire tampon 94 et la mémoire tampon 54 de la mémoire tampon de sortie MTS-1 sont adressées simultanément par les pointeurs de sortie/locaux, et la sélection de celle de ces deux mémoires qui doit être effectivement lue est contrôlée par le bit Local des pointeurs de sortie/locaux. Si par exemple la voie 120 sur le bus LME-1 doit être connectée à la voie 450 sur le bus LMS-1, lorsque le compte défini par les neuf bits du compteur 60 atteint la valeur 40, le pointeur de sortie/local lu de la mémoire de pointeurs 61 a la configuration suivante:

| Adresse | LO/HI | Local | Marquage |
|---|---|---|---|
| 00111100 | 0 | 1 | 1 ou 0 |

Le champ d'adresse spécifie l'adresse 60 et le bit LO/HI spécifie le module 94LO. Le bit Local sur la ligne 79 étant 1, il inhibe la sortie du module 54LO qui est adressé en parallèle avec le module 94LO, et conditionne la sortie de ce dernier module. Le contenu de la position 60 du module de mémoire 94LO qui avait été chargée par le contenu de la voie 120 sur le bus LME-1, est donc placé sur le bus 81. Si le bit marquage est 1, la porte ET 80 est conditionnée et le bus 81 est relié au bus LMS-1. Si le bit de marquage est 0 la sortie de la porte ET 80 est forcée à zéro et un octet zéro est placé sur le bus LMS-1.

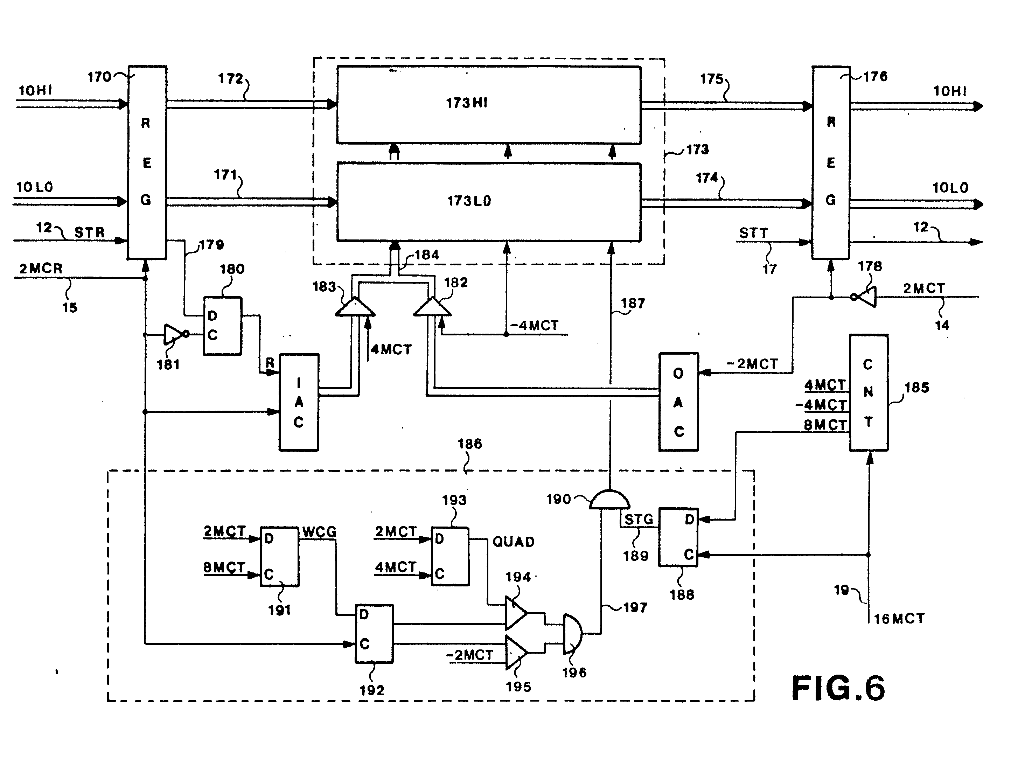

On a représenté sur la fig. 6 le bloc diagramme détaillé du dispositif de bouclage 11 de la fig. 1. Le contenu des bus 10HI et 10LO amont et celui de la ligne de synchronisation amont 12 est chargé dans un registre à dix sept bits 170 sous le contrôle du signal de chronologie à 2,048 MHz reçu de la ligne de chronologie 15 amont. On désignera par la suite ce signal de chronologie par 2MCR. Les sorties du registre 170 qui correspondent aux bus 10LO et 10HI sont appliquées par deux bus 171 et 172 à l'entrée de données de deux modules de mémoires de 256×8 bits référencés 173LO et 173HI qui constituent une mémoire à accès aléatoire 173. Les sorties de données des mémoires 173LO et 173HI sont appliquées par deux bus 174 et 175 à un registre à dix sept étages 176 qui reçoit aussi le signal de synchronisation de trame à transmettre qui est fourni par le dispositif de chronologie 13 sur une ligne 17 et que l'on désignera par STT. Les sorties du registre 176 qui correspondent aux bus 174, 175 et à la ligne 17 sont appliquées respectivement aux bus 10HO et 10HI aval et à la ligne de synchronisation aval 12. Le contenu des bus 174 et 175 et celui de la ligne 17 est chargé dans le registre 176 sous le contrôle d'un signal de chronologie noté –2MCT qui résulte de l'inversion par un inverseur 178 du signal de chronologie à 2,048 MHz fourni par le dispositif de chronologie 13 sur la ligne 14 et noté 2MCT. La sortie du regsitre 170 qui correspond à la ligne de synchronisation de trame 12 est appliquée par une ligne 179 à l'entrée D d'une bascule de type D 180 dont l'entrée d'horloge C reçoit le signal –2MCR résultant de l'inversion du signal 2MCR par un inverseur 181. Le signal 2MCR est appliqué à l'entrée d'un compteur d'adresses d'entrée à huit bits IAC qui est remis à zéro par la sortie de la bascule 180. Le signal –2MCT est appliqué à un compteur d'adresses de sortie OAC dont la sortie est appliquée à une porte ET 182. La sortie du compteur IAC est appliquée à une porte ET 183. Les sorties des portes ET 182 et 183 sont reliées entre elles et à un bus 184 qui est appliqué à l'entrée d'adresse des modules de mémoire 173LO et 173HI. Un signal de chronologie à 16,384 MHz fourni par le dispositif de chronologie 13 et noté 16MCT, est appliqué à un compteur 185 qui en dérive un signal à 4,096 MHz noté 4MCT, le signal inverse de ce dernier –4MCT et un signal à 8,192 MHz noté 8MCT. Le signal –4MCT est appliqué à l'entrée lecture/écriture des modules de mémoire 173LO et 173HI et à la porte ET 182. Le signal 4MCT est appliqué à la porte ET 183. Les signaux 16MCT, 8MCT, 4MCT, 2MCT, –2MCT et 2MCR sont appliqués à un dispositif de sélection de cycle d'écriture 186 dont la sortie est reliée par une ligne 187 à l'entrée de sélection des modules de mémoire 173LO et 173HI. Dans le dispositif 186, les signaux 8MCT et 16MCT sont appliqués respectivement aux entrées D et C d'une bascule de type D 188 dont la sortie vraie produit un signal STG qui est appliqué par une ligne 189 à une entrée d'une porte OU 190 dont la sortie est reliée à la ligne 187. Les signaux 2MCT et 8MCT sont appliqués respectivement aux entrées D et C d'une bascule de type D 191 dont la sortie vraie produit un signal WCG qui est appliqué à l'entrée D d'une bascule de type D dite de sélection 192 dont l'entrée C reçoit le signal 2MCR. Les signaux 2MCT et 4MCT sont appliqués respectivement aux entrées D et C d'une bascule de type D 193 dont la sortie vraie produit un signal noté QUAD qui est appliqué avec la sortie vraie de la bascule 192 à une porte ET 194. Le signal –2MCT et la sortie complémentaire de la bascule 192 sont appliquées à une porte ET 195. Les sorties des portes ET 194 et 195 sont appliquées à une porte OU 196 dont la sortie est appliquée à la porte OU 190 par une ligne 197.

La fonction première du dispositif de bouclage 11 est de maintenir constant et égal à 125 microsecondes le délai de propagation des voies d'échange le long de l'anneau. Le dispositif 11 utilise comme références les signaux produits par le dispositif de chronologie maître 13, à savoir le signal de chronologie 2MCT et le signal de synchronisation de trame STT, et envoie les voies d'échange sur l'anneau en synchronisme vers ces deux signaux. Le dispositif 11 reçoit les voies d'échange de l'anneau en synchronisme avec le signal à 2,048 MHz reçu, noté 2MCR et avec le signal de synchronisation de trame reçu STR. La fonction du dispositif 11 est donc de resynchroniser les voies d'échange reçues de l'anneau sur les signaux de référence qu'il utilise, pour retransmission sur l'anneau.

Le dispositif de bouclage 11 est articulé autour de la mémoire tampon 173, qui fonctionne comme une mémoire tampon élastique. Le contenu des voies d'échange reçues est stocké dans la mémoire tampon aux adresses fournies par le compteur IAC qui fonctionne en synchronisme avec le signal de chronologie reçu 2MCR. La mémoire tampon est lue sur l'anneau sous le contrôle du compteur OAC qui fonctionne en synchronisme avec le signal de chronologie transmis 2MCT. Comme la relation de phase entre les signaux de chronologie transmis et reçus peut être quelconque, il peut y avoir contention entre les opérations d'écriture et de lecture de la mémoire tampon. Cette contention est résolue en utilisant le principe suivant: la durée de chaque intervalle de temps d'échange (488 ns) est divisée en trois périodes, une période de lecture de la mémoire tampon et deux périodes d'écriture, et l'une des deux périodes d'écriture est sélectionnée pour réellement effectuer l'écriture de la mémoire en fonction de la relation de phase entre les signaux de chronologie transmis et reçus. Dans la réalisation, illustrée sur la fig. 6, et pour des raisons pratiques, chaque intervalle de temps d'échange est divisé en quatre périodes de durées égales dites quart temps, deux périodes de lecture dont une seule est effectivement utilisée et deux périodes d'écriture désignées par WA et WB.

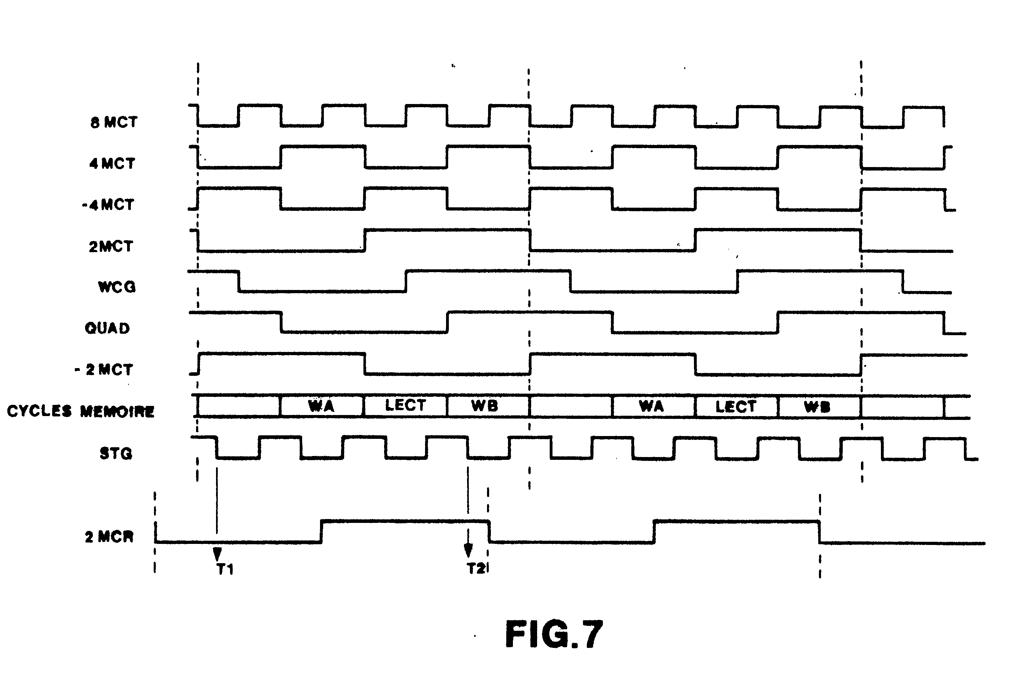

On décrira maintenant le fonctionnement détaillé du dispositif de la fig. 6 en se référant aux diagrammes des temps représentés sur la fig. 7. La mémoire tampon 173 n'est adressée effectivement que lorsque son entrée de sélection est au niveau bas. Elle fonctionne en mode lecture ou écriture selon que son entrée lecture/écriture est au niveau haut ou bas respectivement.

Opération de Lecture

Pendant le premier quart temps, le signal –4MCT est au niveau haut conditionnant la mémoire tampon 173 en mode lecture, mais les signaux QUAD et –2MCT sont hauts forçant l'entrée de sélection de la mémoire-tampon 173 à un niveau haut qui inhibe celle-ci. Pendant le troisième quart temps, le signal –4MCT est au niveau haut conditionnant la mémoire tampon 173 en mode lecture et conditionnant la porte ET 182. Les signaux QUAD et –2MCT sont bas forçant la ligne 197 au au niveau bas. Quand le signal STG sur la ligne 189 passe au niveau bas, la mémoire tampon 173 est sélectionnée par un niveau bas sur la ligne 187 et les positions des modules de mémoire 173LO et 173HI adressées par le contenu du compteur OAC sont lues sur les bus 171 et 175. Le contenu de ces bus est chargé dans le registre de sortie 176 à la transition positive suivante du signal –2MCT.

Opération d'Ecriture

La sélection entre les second et quatrième quart temps pour écrire la mémoire tampon est réalisée en divisant chaque intervalle de temps d'échange en un premier et un second intervalles de temps d'observation englobant respectivement les second et quatrième quart temps et en choisissant les quatrième et second quart temps selon que les voies d'échange reçues sont chargées dans le registre d'entrée 170 pendant le premier ou second intervalles de temps d'observation. Le chargement du registre d'entrée 170 est commandé par la transition positive du signal 2MCR. Les premier et second intervalles de temps d'observation sont déterminés par le signal WCG qui est respectivement bas et haut pendant les premier et second intervalles de temps d'observation. Si le signal WCG est haut à la transition positive du signal 2MCR, la bascule de sélection 192 est mise à 1 et les sorties vraie et complémentaire de la bascule 192 sont respectivement haute et basse. L'ensemble des portes 194, 195, 196 se comporte comme un sélecteur qui transfère sur la ligne 197 le signal QUAD ou le signal –2MCT selon que la bascule de sélection est à 1 ou à 0.

On a illustré sur la fig. 7 le cas où la transition du signal 2MCR se produit lorsque le signal WCG est bas. Les sorties vraie et complémentaire de la bascule 192 sont respectivement basse et haute et le signal –2MCT est appliqué sur la ligne 197. Pendant le second quart temps rien ne se produit car le signal –2MCT sur la ligne 197 inhibe la mémoire tampon. Pendant le troisième quart temps, le signal –2MCT est bas et la mémoire fonctionne en mode lecture comme déjà décrit. Pendant le quatrième quart temps le signal 4MCT est haut conditionnant la porte ET 183 qui permet à l'adresse fournie par le compteur IAC d'être appliquée à l'entrée d'adresse des modules de mémoire 173LO et 173HI qui sont en mode écriture. Lorsque le signal STG passe au niveau bas le contenu des bus 171 et 172 est écrit dans les modules de mémoires 173LO et 173HI à l'adresse définie par le compteur IAC.

Si la transition positive du signal 2MCR se produit pendant que WCG est haut, le contenu des voies d'échange reçues sera écrit dans la mémoire tampon 173 pendant le second quart temps qui suit l'apparition de cette transition. Par exemple, en se référant à la fig. 7 si la transition positive de 2MCR se produit en T1, la mémoire tampon sera écrite pendant le second quart temps de ce même intervalle de temps d'échange. Si la transition positive de 2MCR se produit en T2, la mémoire tampon sera écrite pendant le second quart temps de l'intervalle de temps d'échange suivant.

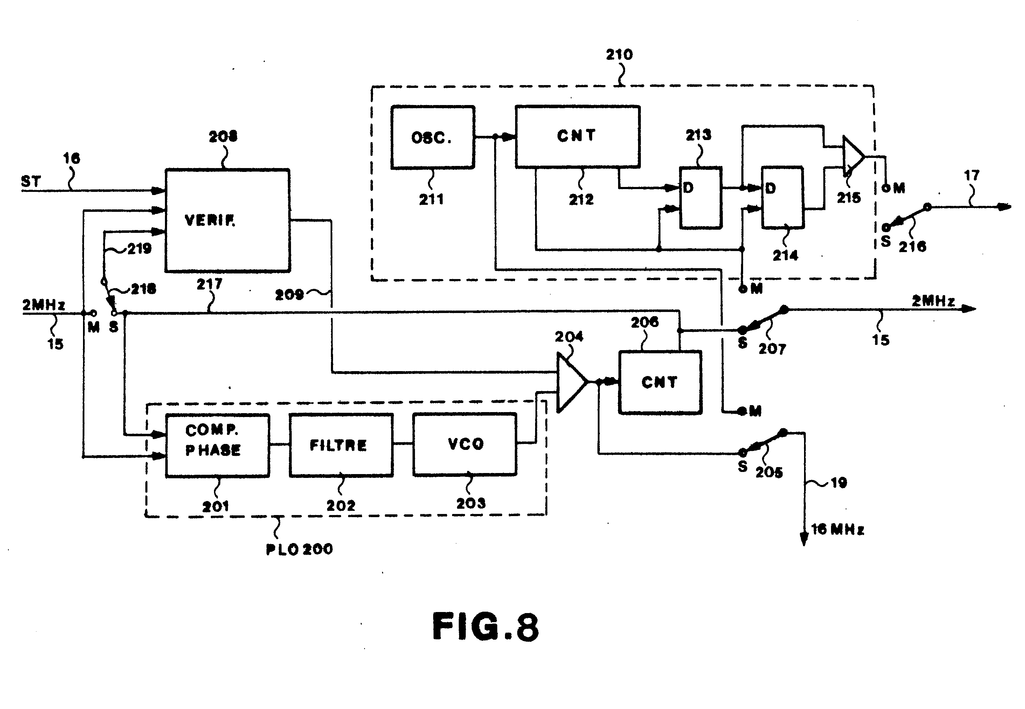

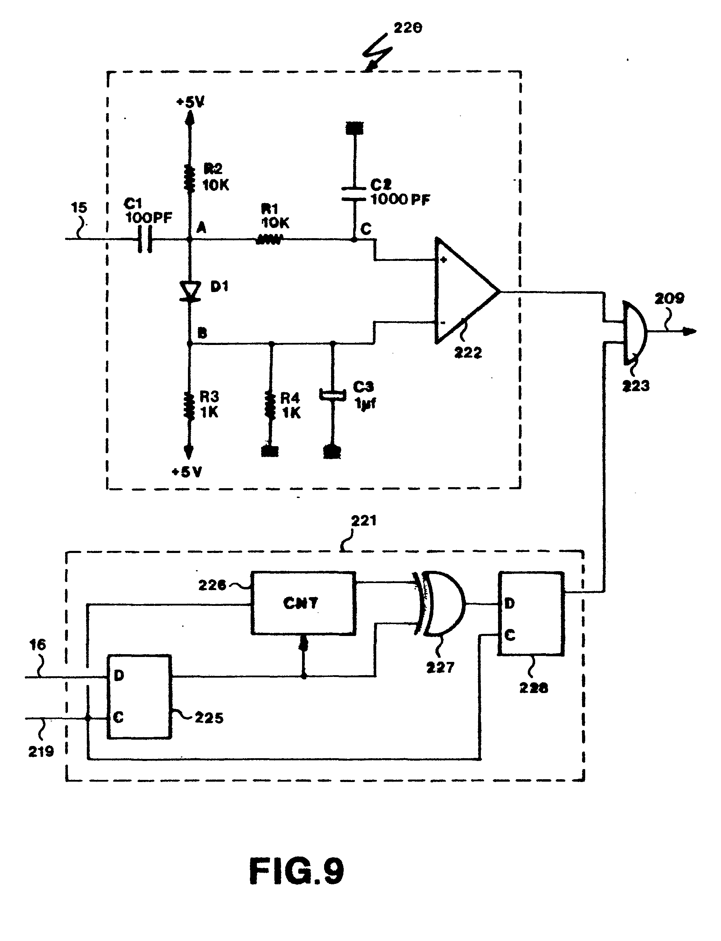

On a représenté sur la fig. 8 le bloc diagramme d'un dispositif de chronologie qui montre la réalisation des dispositifs de chronologie maître-esclave 13 et 18. Le signal de chronologie à 2,048 MHz sur la ligne de chronologie 15 amont est appliquée à un oscillateur à verrouillage de phase PLO 200 constitué de façon connue par un comparateur de phase 201, un filtre de boucle 202 et un oscillateur commandé en tension VCO 203 dont la fréquence nominale est 1,6384 MHz. La sortie du VCO 203 est appliquée à une porte ET 204 dont la sortie est reliée au pôle, noté S, d'un commutateur à deux pôles 205 dont le pôle commun est relié à la ligne 19 (fig. 1). La sortie de la porte ET 204 est aussi appliquée à un compteur à trois étages 206 dont la sortie est reliée par une ligne 217 à l'autre entrée du comparateur de phase 201, au pôle, noté S, d'un commutateur à deux pôles 207 dont le pôle commun est reliée à la ligne de chronologie aval 15, et au pôle, noté S, d'un commutateur à deux pôles 218. Les lignes 15 et 16 sont appliquées à un dispositif de vérification de chronologie 208 qui sera décrit en détail en référence à la fig. 9 et dont la sortie est reliée par une ligne 209 à une entrée de la porte ET 204. La ligne 15 est aussi reliée à l'autre pôle, noté M, du commutateur 218 dont le pôle commun est relié au dispositif 208 par une ligne 219. Une source de chronologie 210 est constituée par un oscillateur maître à quartz 211 de fréquence nominale 1,384 MHz et un compteur à onze étages 212 commandé par la sortie de l'oscillateur 211 qui est reliée aussi à l'autre pôle, noté M, du commutateur 205. Le troisième étage du compteur 212 est relié au pôle M du commutateur 207 et à l'entrée d'horloge de deux bascules de type D 213 et 214. Le onzième étage du compteur 212 est relié à l'entrée D de la bascule 213 dont la sortie vraie est reliée à l'entrée D de la bascule 214. La sortie vraie de la bascule 213 et la sortie complémentaire de la bascule 214 sont appliquées à une porte ET 215 dont la sortie est reliée à un pôle, noté M, d'un commutateur à deux pôles 216. Ce dernier a l'autre pôle noté S, libre et le pôle commune reliée à la ligne 17 (fig. 1).

Dans un dispositif de chronologie esclave 18, les commutateurs 205, 207, 216 et 218 sont en position S et la source de chronologie n'existe pas. Le signal de chronologie à 2,048 MHz sur la ligne 15 est appliqué au PLO 200 qui produit un signal de chronologie filtré à 16,384 MHz de façon connue. En fonctionnement normal, la ligne 209 est haute et le signal produit sur le PLO est distribué à tous les éléments de l'unité de commutation par la ligne 19 (fig. 1). La sortie du compteur 206 produit un signal de chronologie à 2,048 MHz régénéré qui est appliqué en réaction à l'entrée du PLO 20 de façon connue, et à la ligne de chronologie 15 aval. Lorsque le signal de chronologie sur la ligne 15 amont est absent ou est tel qu'il ne puisse plus commander le PLO 200 de façon correcte ou d'une manière plus générale lorsque le signal de chronologie est défectueux, cet état est détecté par le dispositif de vérification de chronologie 208 qui fait passer la ligne 209 au niveau bas bloquant la porte ET 204 et interrompant la distribution du signal de chronologie sur la ligne de chronologie 15 aval et celle du signal à 16,384 MHz aux éléments de l'unité de commutation. Le signal sur la ligne 209 est aussi envoyé au contrôleur 20. Dans un dispositif de chronologie esclave, le dispositif de vérification de chronologie 208 vérifie aussi le synchronisme entre le signal de synchronisation de trame sur la ligne 16 et le signal de chronologie régénéré qui lui est appliqué à travers la ligne 217, le commutateur 218 en position S et la ligne 219. Si ces deux signaux ne sont pas en synchronisme le dispositif 208 baisse la ligne 209.

Dans un dispositif de chronologie maître 13, les commutateurs 205, 207, 216 et 218 sont en position M, et le PLO 200 et le compteur 206 n'existent pas. Le signal à 16,384 MHz est fourni par l'oscillateur maître à quartz 211. Le signal de chronologie à 2,048 MHz appliqué à la ligne de synchronisation aval 15 est fourni par le compteur 212, et le signal sur la ligne relié au onzième étage du compteur 212 est un signal 8 kHz avec un cycle bas/haut de 50%. Sur la sortie vraie de la bascule 213 on retrouve ce signal synchronisé avec le signal à 2,048 MHz et sur la sortie complémentaire de la bascule 214 on retrouve le signal de sortie de la bascule 213 inversé, retardé de la période du signal à 2,048 MHz, c'est-à-dire retardé de 488 nanosecondes. On obtient ainsi en sortie de la porte ET 215 un train d'impulsions à 8 kHz, chaque impulsion ayant une largeur de 488 nanosecondes. Ce train d'impulsions constitue le signal de synchronisation de trame qui est appliqué au dispositif de bouclage 11 par la ligne 17. Le dispositif de vérification de chronologie 208 vérifie le signal de chronologie sur la ligne de chronologie amont 15, et le synchronisme entre le signal de synchronisation de trame sur la ligne 16 et le signal de chronologie sur la ligne 15 qui lui est appliqué à travers le commutateur 218 en position M et la ligne 219. En cas de défaillance de l'un de ces signaux le dispositif 208 en informe le contrôleur 20.

On a représenté sur la fig. 9 un exemple de réalisation du dispositif de vérification de chronologie 208. Il comprend un détecteur de présence du signal de chronologie à 2,048 MHz, référencé 220 et un vérificateur de synchronisation 221. Dans le détecteur de présence 220, la ligne 15 est reliée à une extrémité d'un condensateur C1 dont l'autre extrémité est reliée à l'entrée (+) d'un comparateur 222 à travers une résistance R1. Le nœud commun à la résistance R1 et au condensateur C1 (nœud A) est reliée à une source de tension +5 volts à travers une résistance R2. Les résistances R1 et R2 ont typiquement une valeur égale à 10 kΩ. Le nœud A est aussi connecté à l'anode d'une diode D1 dont la cathode est reliée à une source de tension de +5 volts à travers une résistance R3 et à la masse à travers une résistance R4. Les résistances R3 et R4 ont typiquement une valeur égale à 1 kΩ. Un condensateur C3 de forte valeur (1 µF) est connecté en parallèle à la résistance R4. Le nœud commun aux résistances R3 et R4, référencé B, est relié à l'entrée (−) du comparateur 222. La sortie du comparateur 222 est reliée à une entrée d'une porte OU 223 dont la sortie est reliée à la ligne 209 (fig. 8).

En fonctionnement, le nœud B est à un potentiel de référence de 2,5 volts. Lorsqu'il n'y a pas de signal de chronologie sur la ligne d'entrée 15, le condensateur C1 isole cette ligne du reste du circuit 220 et le nœud A est à un potentiel égal au potentiel du nœud B augmenté de la différence de potentiel aux bornes de la diode D1 soit environ à un potentiel de 3,2 volts. La sortie du comparateur est alors à un niveau haut qui indique une condition d'erreur. Lorsque les impulsions sont présentes sur la ligne 15, elles sont différenciées par le condensateur C1 mais le circuit constitué par la diode D1, les résistances R3 et R4 et le condensateur C3 présentant une faible impédance aux impulsions positives on obtient en A un signal constitué essentiellement par la succession des impulsions négatives résultant de la différenciation des impulsions de chronologie sur la ligne 15. On obtient alors en C le signal en A intégré par l'intégrateur R1, R2, C2, c'est-à-dire une tension négative. La constante de temps de l'intégrateur est choisie de telle sorte que lorsque le signal de chronologie en entrée sur la ligne 15 est correct on obtienne en C une tension inférieure à la tension de référence au nœud B, et un niveau bas en sortie du comparateur 222. Si la période du signal de chronologie sur la ligne 15 est trop grande, le potentiel au nœud C reste supérieur à la tension de référence en B, et la sortie du comparateur 222 passe au niveau haut indiquant une condition d'erreur.

Le dispositif de vérification de synchronisation 221 comprend une bascule de type D 225 qui reçoit sur son entrée D, le signal de synchronisation de trame sur la ligne de synchronisation amont 12 qui lui est appliquée par la ligne 16, et sur son entrée d'horloge C le signal de chronologie à 2,048 MHz qui lui est appliquée par la ligne 219. La sortie vraie de la bascule 225 est appliquée à l'entrée de remise à zéro d'un compteur à huit étages 226 qui reçoit sur son entrée de comptage le signal sur la ligne 219. La sortie vraie de la bascule 225 et la sortie de report du compteur 226 sont appliquées à un circuit OU Exclusif 227 dont la sortie est appliquée à l'entrée D d'une bascule de type D 228 qui a son entrée horloge reliée à la ligne 219 et sa sortie appliquée à la porte OU 223.

En fonctionnement, on obtient à la sortie de report du compteur 226 un signal à 8 kHz synchronisé avec le signal de chronologie sur la ligne 219. Si ce signal est synchronisé avec le signal de synchronisation de trame sur la ligne 16, le circuit OU Exclusif 227 produit un niveau bas indicatif d'un fonctionnement correct. Si ce signal à 8 kHz n'est pas en synchronisme avec le signal de synchronisation de trame sur la ligne 16, le circuit OU Exclusif 227 produit un niveau haut indicatif d'une condition d'erreur. Le niveau haut est transféré sur la ligne 209 à travers la bascule 228 et la porte OU 223.

## Revendications

1. Système de synchronisation pour un système de communication dans lequel plusieurs unités (MC-1,MC-N) sont connectées en série par une liaison unidirectionnelle en boucle (10) qui fonctionne en mode multiplex temporel avec des trames récurrentes de durées égales, chacune d'elles étant divisée en une pluralité d'intervalles de temps de durées égales pendant lesquels la liaison en boucle (10) transporte une pluralité de voies temporelles, ledit système de sychronisation comprenant un dispositif de bouclage (11) inséré dans la liaison en boucle (10) et comprenant une mémoire à accès aléatoire (173), des moyens d'entrée (170) pour appliquer la liaison en boucle amont à l'entrée de données de la mémoire (173), des moyens de sortie (176) pour appliquer la sortie des données de la mémoire (173) à la liaison en boucle aval, un premier compteur (IAC) pour générer séquentiellement des adresses d'entrée sous la commande d'un signal de chronologie reçu (2MCR), à chaque intervalle de temps, ce premier compteur (IAC) fournissant une adresse d'entrée qui spécifie l'adresse de la position de la mémoire (173) à laquelle la sortie desdits moyens d'entrée doit être emmagasinée, et un second compteur (OAC) pour générer séquentiellement les adresses de sortie sous la commande d'un signal de chronologie transmis (−2MCT), à chaque intervalle de temps, ce second compteur (OAC) fournissant une adresse de sortie qui spécifie l'adresse de la position de la mémoire (173) qui soit en être lue, ledit dispositif de bouclage (11) étant caractérisé en ce qu'il comprend:

des moyens (191, WCG) pour diviser chaque intervalle de temps en deux périodes d'observation,

des moyens (QUAD, −2MCT) pour définir dans chaque intervalle de temps une période de lecture fixe et deux périodes d'écritures fixes qui entourent la période de lecture fixe,

des moyens (−4MCT, 182) pour commander la lecture de la mémoire pendant une période de lecture fixe (LECT) à l'intérieur de chaque intervalle de temps,

des moyens de sélection (192) pour sélectionner l'une des deux périodes d'écriture selon que le signal de chronologie reçu se situe à l'intérieur de l'une ou l'autre des deux périodes d'observation, et

des moyens (185, 193−196) pour commander l'écriture de la mémoire (173) pendant la période d'écriture sélectionnée par lesdits moyens de sélection.

2. Système de synchronisation selon la revendication 1, caractérisé en ce qu'il comprend:

une liaison de chronologie en boucle (15) fermée par un dispositif de chronologie maître (13) qui fournit sur celle-ci ledit signal de chronologie transmis (2MCT) et reçoit de elle-ci ledit signal de chronologie reçu (2MCR), et

plusieurs dispositifs de chronologie esclaves (18) insérés dans la liaison de chronologie en boucle pour régénérer le signal de chronologie circulant sur la liaison de chronologie en boucle, chacun des dispositifs de chronologie esclaves dérivant du signal de chronologie régénéré un signal de chronologie (16 MHz) qui a une fréquence supérieure à celle du signal de chronologie régénéré et qui est appliqué à un groupe (UC-1, UC-M) d'au moins une unité,

et en ce que: chacun des dispositifs de chronologie maître et esclave comprend des moyens de vérification de chronologie (208) qui en réponse à une défectuosité du signal de chronologie sur la liaison de chronologie appliquée à l'entrée du dispositif de chronologie interrompent la génération du signal de chronologie régénéré.

3. Système de synchronisation selon la revendication 2, pour un système de communication dans lequel un signal de synchronisation de trame circule sur une liaison de synchronisation (12) parallèle à la liaison unidirectionnelle en boucle (10), caractérisé en ce que les moyens de vérification de chronologie comprennent:

un dispositif de vérification de signal de chronologie (220) pour vérifier si le signal de chronologie sur la liaison de chronologie en boucle appliqué à l'entrée du dispositif de chronologie est défectueux,

un dispositif de vérification de synchronisation (221) pour vérifier la synchronisation entre le signal de chronologie régénéré et le signal de synchronisation de trame circulant sur la liaison de synchronisation, et

des moyens (223) pour interrompre la génération du signal de chronologie en réponse à la défectuosité de l'un ou l'autre du signal de chronologie sur la liaison de chronologie et du signal de synchronisation de trame sur la liaison de synchronisation.

**Patentansprüche**

1. Synchronisierungssystem für ein Verkehrssystem, in dem mehrere Einheiten (MC-1, MC-N) seriell über eine schleifenförmige Simplexverbindung (10), die im temporären Multiplexbetrieb mit rekursiven Rastern gleicher Dauer arbeitet, verbunden sind, wobei jede dieser Zeiten in eine Vielzahl von Zeitintervallen gleicher Dauer geteilt ist, während der die schleifenförmige Verbindung (10) eine Vielzahl von temporären Kanälen trägt, das genannte Synchronisierungssystem eine in der schleifenförmigen Verbindung (10) eingegliederte Vorrichtung zur Schleifenbildung (11) aufweist sowie einen Direktzugriffsspeicher (173), Eingangsmittel (170) um die vorgeschaltete Schleifenverbindung mit dem Dateneingang des Speichers (173) zu verbinden, Ausgangsmittel (176) um den Datenausgang des Speichers (173) mit der nachgeschalteten Schleifenverbindung zu verbinden, einen ersten Zähler (IAC) zum sequentiellen Generieren der Eingangsadressen unter der Steuerung eines empfangenen Zeitsignals (2MCR), welcher erste Zähler (IAC) bei jedem Zeitintervall eine Eingangsadresse erstellt, die die Adresse des Speicherplatzes (173) angibt, indem der Ausgang der genannten Eingangsmittel eingelagert werden soll, sowie einen zweiten Zähler (OAC) zum sequentiellen Generieren der Ausgangsadressen unter der Steuerung eines ausgegebenen Zeitsignals (–2MCT), welcher zweite Zähler (OAC) bei jedem Zeitintervall eine Ausgangsadresse erstellt, die die Adresse des zu lesenden Speicherplatzes (173) angibt, wobei die genannte Vorrichtung zur Schleifenbildung dadurch gekennzeichnet ist, dass sie aufweist:

Mittel (191, WCG), um jedes Zeitintervall in zwei Beobachtungsperioden zu teilen,
Mittel (QUAD, –2MCT), um innerhalb jedes Zeitintervalles eine feste Leseperiode und zwei feste, beiderseits dieser Leseperiode liegende Schreibperioden zu definieren,
Mittel (–4MCT) (182), um das Lesen des Speichers während einer festen Leseperiode (LECT) innerhalb jedes Zeitintervalles zu steuern,
Auswahlmittel (192), um eine der beiden Schreibperioden im Hinblick darauf zu wählen, ob das empfangene Zeitsignal im Innern der einen oder der anderen der beiden Beobachtungsperioden liegt;
Mittel (185, 193–196), um das Schreiben des Speichers (173) während der von den genannten Auswahlmitteln gewählten Periode zu steuern.

2. Synchronisierungssystem nach Anspruch 1, dadurch gekennzeichnet, dass es folgendes aufweist:

eine Chronologie-Verbindungsschleife (15), von einer Meister-Chronologievorrichtung (13) geschlossen, die der Verbindungsschleife das genannte übermittelte Chronologiesignal (2MC) erstellt und von dieser das genannte empfangene Chronologiesignal (2MCR) erhält, und
mehrere nachgeführte Chronologievorrichtungen (18), in die schleifenförmige Chronologieverbindung eingegliedert, um das auf der schleifenförmigen Chronologievorrichtung anstehende Chronologiesignal regenerieren, wobei jede der nachgeführten Chronologievorrichtungen von dem regenerierten Chronologiesignal ein Chronologiesignal (16 MHz) ableitet, dessen Frequenz höher als die des regenerierten Chronologiesignals ist und das einer aus zumindest einer Einheit bestehenden Gruppe (UC-1, UC-M) zugeleitet wird, und dadurch gekennzeichnet, dass:

jede der Meister-Chronologievorrichtungen und der nachgeführten Chronologievorrichtungen Prüfmittel der Chronologie (208) enthält, die auf einen Fehler des Chronologiesignals in der am Eingang der Chronologievorrichtung anstehenden Chronologieverbindung ansprechen und die Generierung des wiedereingeschriebenen Chronologiesignals unterbrechen.

3. Synchronisierungssystem nach Anspruch 2 für ein Verkehrssystem, in dem ein Raster-Synchronisiersignal auf einer Synchronisierverbindung (12) ansteht, die parallel zu einer schleifenförmigen Simplexverbindung (10) geschaltet ist, dadurch gekennzeichnet, dass die genannten Prüfmittel der Chronologie umfassen:

eine Prüfvorrichtung des Chronologiesignals (220), um zu prüfen, ob das Chronologiesignal auf der schleifenförmigen Chronologieverbindung, das am Eingang der Chronologievorrichtung ansteht, fehlerbehaftet ist,
eine Prüfvorrichtung der Synchronisierung (221), um zu prüfen, ob die Synchronisierung zwischen dem wiedereingeschriebenen Chronologiesignal und dem auf der Synchronisierverbindung anstehenden Rastersynchronisiersignal einwandfrei ist, und
Mittel (223), um die Erstellung des Chronologiesignals als Folge eines Fehlers des einen oder des anderen Chronologiesignals auf der Chronologieverbindung des Rastersynchronisiersignals auf der Synchronisierverbindung zu unterbinden.

**Claims**

1. A synchronization system for a communication system wherein a plurality of units (MC-1, MC-N7 are connected in series by means of a unidirectional closed-loop link (10) operating in the time-division multiplex mode with recurrent frames of equal duration each of wich is divided into a plurality of equal time intervals during which said closed-loop link (10) carries a plurality of time-division channels, said synchronization system including loop control means (11) inserted in said closed-loop link, a random access memory (173), input means (170) for applying the contents of the upstream portion of said closed-loop link to the data input of said memory (173), output means (176) for applying the output data from said memory (173) to the downstream portion of said closed-loop link, first counter means (IAC) for sequentially generating input addresses under the control of an incoming timing signal (2MCR), said first counter (IAC) supplying during each of said time intervals an input address specifying the address of the location in said memory (173) where the output from said input means is to be stored, and second counter means (OAC) for sequentially generating output addresses under the control of an outgoing timing signal (–2MCT) during each of said time intervals, said second counter (OAC) supplying an output address specifying the location of said memory (173) that is to be read out, said loop control means (11) being characterized in that it comprises:

means (191, WCG) for dividing each time interval into two wait periods,

means (QUAD, –2MCT) for defining within each of said time intervals two fixed write periods separated by a fixed readout periods,

means (–4MCT, 182) for causing read operations to be performed in said memory during a fixed readout period (LECT) within each of said time intervals,

selection means (192) for selecting one of the two write periods depending on which of said two wait periods contains the incoming timing signal, and

means (185, 193–196) for causing write operations to be performed into said memory (173) during the write period selected by said selection means.

2. A synchronization system according to claim 1, characterized in that it includes:

a closed-loop timing link (15) closed by a master timing device (13) that sends said outgoing timing signal (2MCT) thereon and receives said incoming timing signal (2MCR) therefrom, and

a plurality of slave timing devices (18) inserted in said closed-loop timing link to regenerate the timing signal traveling thereon, each of said devices deriving from the regenerated timing signal a timing signal that exhibits a higher frequency (16 MHz) than said regenerated timing signal and is applied to a group (UC-1, UC-M) comprising at least one unit,

and further characterized in that:

each of said master and slave timing devices includes timing signal checking means (208) responsive to the application to the input of any of said devices of a defective timing signal traveling on said closed-loop timing link to terminate the generation of the regenerated timing signal.

3. A synchronization system according to claim 2, for a communication system wherein a frame synchronizing signal travels on a synchronization link (12) running parallel to said unidirectional closed-loop link (10), characterized in that said timing signal checking means includes:

a timing signal checking device (220) for determining whether the timing signal traveling on said closed-loop timing link and applied to the input of the timing device is defective,

a synchronization checking circuit (221) for determining whether the regenerated timing signal and the frame synchronizing signal traveling on said synchronization link are synchronized, and

means (223) for terminating the generation of the timing signal whenever either the timing signal on the timing link or the frame synchronizing signal on the synchronization link is defective.

FIG .1

FIG.2

**FIG.3**

FIG.4A

FIG.4

| FIG.4A | FIG.4B | FIG.4C |
| FIG.4D | FIG.4E | FIG.4F |

0 112 426

34

33

32

# FIG.4B

100

R/W —— | DEMPX | ~98

96~        ~97

FIG.4C

FIG. 4D

FIG.4E

**FIG. 4F**

FIG.5

ST AMONT

ST INT.

ST AVAL

16 MHZ

CLK 1

CLK 2

ANNEAU AMONT — 246 | 247 | 248

ANNEAU INT. — 245 | 246 | 247

ANNEAU AVAL — 245 | 246 | 247

LIAISON ENTRANTE — BIT 6 VOIE 31 | BIT 7 VOIE 31 | BIT 0 VOIE 0

LIAISON SORTANTE — BIT 6 VOIE 31 | BIT 7 VOIE 31 | BIT 0 VOIE 0

0 112 426

FIG.6

**FIG.7**

FIG.8

**FIG.9**